# FASCICULE DE BREVET EUROPEEN

(11) **EP 3 849 462 B1**
(45) Date de publication et mention de la délivrance du brevet: **15.11.2023**
(21) Numéro de dépôt: 19768771.8
(22) Date de dépôt: 10.09.2019
(51) Int. Cl.: A61C 8/00

(54) **ELÉMENT MONOBLOC DE CICATRISATION DENTAIRE**
EINSTÜCKIGES ZAHNÄRZTLICHES WUNDHEILELEMENT
ONE-PIECE DENTAL HEALING ABUTMENT

(30) Priorité: 14.09.2018 FR 1858274
(43) Date de publication de la demande: 21.07.2021
(73) Titulaire: Euroteknika, 74700 Sallanches (FR)
(72) Inventeur: LANCIEUX, Cédric, 74120 Megève (FR); CALVAT, Benjamin, 73400 UGINE (FR); LEGER, Théo, 74700 Domancy (FR)
(74) Mandataire: Novaimo
(86) Numéro de dépôt international: PCT/EP2019/074140
(87) Numéro de publication internationale: WO 2020/053229

(56) Documents cités:
- EP-A1- 3 437 586
- WO-A1-2013/004387

## Description

### Domaine technique de l'invention

La présente invention se rapporte à un élément de cicatrisation destiné à être fixé à un implant dentaire. Elle porte aussi sur un ensemble de restauration dentaire comprenant un tel élément de cicatrisation et un implant. Enfin, elle porte aussi sur un procédé de restauration dentaire.

### État de la technique

La restauration dentaire permet de réaliser une dentition artificielle à un patient partiellement ou totalement édenté. Elle repose sur l'intégration d'un ou plusieurs implants dans la structure osseuse, pratiquée par une incision de la gencive afin d'atteindre la structure osseuse et de la percer. Ensuite, un élément de cicatrisation est en général fixé sur un implant et cet ensemble reste intouché jusqu'à solidarisation de l'implant dans la structure osseuse par ostéointégration et cicatrisation de la gencive autour de l'élément de cicatrisation. La restauration dentaire peut être finalisée par la fixation d'un pilier de restauration sur l'implant, sur lequel est fixée la prothèse dentaire. Le pilier et la prothèse dentaire sont personnalisés, adaptés à l'anatomie du patient et à la dent à remplacer, pour atteindre un résultat aussi proche que possible de la dentition naturelle idéale. Pour cela, le volume précis de l'espace à restaurer est en général pris en compte, par une prise d'empreinte, qui permet la fabrication personnalisée de la prothèse dentaire.

Le document US 2016/206408 A1 décrit un élément monobloc de cicatrisation temporaire de la gencive qui est adapté à une fixation sur un implant dentaire et dont la partie en contact avec la gencive s'étend selon un axe différent de l'axe de l'implant. Les documents WO 2014/200404 A1 et WO 2014/012973 A2 décrivent d'autres éléments de cicatrisation dans lesquels la partie en contact avec la gencive s'étend selon un axe différent de l'axe de l'implant.

Dans l'état de la technique, les méthodes existantes de restauration dentaire se heurtent à tout ou partie des problèmes techniques suivants :
- dans de nombreux procédés existants, une nouvelle intervention sur la gencive est réalisée après sa cicatrisation suite à la pause d'implant, pour réaliser l'empreinte, matérielle ou numérique, de l'espace à restaurer, tout en ayant une vue de l'implant et de la gencive pour prendre en compte précisément l'ensemble de cette géométrie, dans le but de fabriquer un pilier et une prothèse de formes précises : cette approche est naturellement traumatisante ;
- d'autres procédés existants limitent ce traumatisme en utilisant des composants de cicatrisation qui ne sont pas retirés lors d'une prise d'empreinte, pour ne pas heurter la gencive : en contrepartie, ces procédés utilisent des éléments cicatrisants particuliers, en général de forme sensiblement cylindrique et standard et intégrant parfois des indicateurs et/ou plusieurs composants complémentaires pour permettre la prise en compte de tout ou partie de la géométrie au-dessus de l'implant sans y avoir totalement accès par une prise d'empreinte. Ces méthodes moins traumatisantes présentent alors d'autres inconvénients, de complexité et/ou de moins bonne optimisation de la phase de cicatrisation ;
- les éléments de restauration dentaire existant offrent une faible flexibilité d'aspect, et/ou de positionnement, et/ou d'orientation par rapport aux dents avoisinantes. Durant la période transitoire, qui précède la restauration finale avec une prothèse fixée sur l'implant, l'aspect esthétique est ainsi souvent négligé. De plus, un mauvais positionnement et/ou une mauvaise orientation peut induire des contraintes mécaniques importantes dans la structure osseuse et dans la gencive en cours de cicatrisation. De telles contraintes peuvent être douloureuses et ralentir la cicatrisation ;
- le pilier de restauration et la prothèse dentaire sont alignés avec l'implant ; ce dernier doit donc être positionné selon l'axe défini par la dentition à restaurer, c'est-à-dire l'axe de la prothèse dentaire. Cette approche présente l'inconvénient du manque de flexibilité du positionnement de l'implant dans la structure osseuse. Si cette dernière est insuffisante au niveau de l'emplacement imposé pour l'implant, il faut procéder à une greffe osseuse préalable, ce qui induit une lourdeur chirurgicale supplémentaire, préjudiciable au patient.

### Objet de l'invention

Ainsi, un objet général de l'invention consiste en un élément de cicatrisation qui ne comprend pas tout ou partie des inconvénients de l'état de la technique.

Plus précisément, un premier objet de l'invention est une solution de restauration dentaire qui minimise le traumatisme du patient lors du procédé de restauration.

Un second objet de l'invention est une solution de restauration dentaire qui permet une restauration la plus adaptée possible à l'anatomie du patient.

Un troisième objet de l'invention est une solution de restauration dentaire la plus simple possible.

Un quatrième objet de l'invention est une solution de restauration dentaire permettant d'atteindre un aspect esthétique optimal.

Un cinquième objet de l'invention est une solution de restauration dentaire limitant le recours aux greffes osseuses.

A cet effet, l'invention porte sur un élément de cicatrisation monobloc, caractérisé en ce qu'il comprend :
- une partie implantaire adaptée à une fixation sur un implant dentaire, dont au moins une partie inférieure est orientée selon un premier axe,
- une partie coronaire destinée à une intégration au sein d'une gencive pour mettre en forme la gencive lors de sa cicatrisation, dont au moins une partie supérieure s'étend globalement selon un deuxième axe,
et caractérisé en ce que le premier axe et le deuxième axe forment un premier angle non nul.

La partie coronaire peut comprendre une surface latérale destinée à une intégration au sein d'une gencive pour mettre en forme la gencive lors de sa cicatrisation, et une surface terminale à son extrémité supérieure, une partie de la surface latérale et de la surface terminale formant une surface émergente, destinée à rester hors de la gencive, qui est asymétrique par rapport à au moins un plan médian pour présenter une forme anatomique, et/ou cette surface émergente comprenant un unique plan de symétrie pour présenter une forme anatomique.

Des parties de la surface émergente de l'élément de cicatrisation destinées respectivement à un positionnement orienté vers l'intérieur et vers l'extérieur de la bouche peuvent présenter une forme différente.

Une section transverse perpendiculairement au deuxième axe de la surface latérale de la partie coronaire ou une projection sur un plan parallèle à un plan transverse perpendiculaire au deuxième axe de la surface émergente de la partie coronaire peut présenter :
- une forme sensiblement trapézoïdale ou une forme sensiblement polygonale, ou triangulaire, ou carrée, ou rectangulaire, ou ovoïde, ou une forme sensiblement polygonale avec des angles arrondis ; et/ou
- une partie destinée à un positionnement orienté vers l'extérieur de la bouche de plus grande dimension qu'une partie destinée à un positionnement orienté vers l'intérieur.

La surface émergente de l'élément de cicatrisation peut présenter une forme tridimensionnelle identifiable, formant une partie de prise d'empreinte numérique, permettant automatiquement sa reconnaissance, son positionnement, et/ou son orientation et indirectement le positionnement et l'orientation d'un l'implant (60), sans marqueur.

L'élément de cicatrisation peut présenter les caractéristiques suivantes :
- au moins une partie de la surface latérale de la partie coronaire, notamment au niveau d'une partie supérieure comme une surface émergente, est formée par un ensemble de génératrices parallèles, et le deuxième axe est parallèle à cet ensemble de génératrices ; ou
- au moins une partie de la surface latérale de la partie coronaire, notamment au niveau d'une partie supérieure comme une surface émergente, est inscrite dans un cylindre à section circulaire le plus proche de ladite partie, et le deuxième axe correspondant à l'axe de ce cylindre.

L'élément de cicatrisation peut comprendre une portée conique apte à coopérer avec une portion conique d'une tête de vis pour rendre étanche une interface entre une vis et l'élément de cicatrisation, et/ou peut comprendre une portion tronconique apte à coopérer avec une portée conique de l'implant pour rendre étanche une interface entre l'implant et l'élément de cicatrisation et pour réduire à zéro tout jeu en translation entre l'élément de cicatrisation et l'implant.

L'élément de cicatrisation peut comprendre un élément anti-rotationnel, notamment une portion de section hexagonale, pour coopérer avec un élément anti-rotationnel d'un implant, notamment une ouverture de section hexagonale, et garantir une fixation de l'élément de cicatrisation sans rotation autour de l'implant.

L'élément de cicatrisation peut être fabriqué à partir d'un matériau polymère, notamment à partir d'un matériau « PEEK » ou en métal, en zircone ou en titane et/ou être fabriqué par usinage et/ou par moulage et/ou par addition de matière.

L'ouverture centrale peut comprendre localement un élargissement dimensionné pour permettre le pivotement d'une vis vers une orientation parallèle au premier axe et/ou pour recevoir un élément de liaison mâle d'un élément prothétique, notamment d'un pilier, d'un support de prothèse provisoire, d'un capuchon, ou d'un élément de prise d'empreinte.

L'élément de cicatrisation peut comprendre un dispositif de liaison agencé dans le deuxième tronçon de l'ouverture centrale dans la partie coronaire apte à recevoir la fixation amovible d'un pilier, d'un support de prothèse provisoire, d'un capuchon, ou d'un élément de prise d'empreinte.

L'angle formé entre le premier axe et le deuxième axe peut être compris entre 5 et 30 degrés ou est supérieur ou égal à 10 degrés.

L'élément de cicatrisation peut comprendre une ouverture centrale s'étendant sur toute sa longueur, adaptée pour le passage d'une vis et/ou d'un outil comme un tournevis pour le vissage d'une vis dans un implant, l'ouverture centrale comprenant une sortie au niveau de l'extrémité inférieure de la partie implantaire, destinée à une coopération avec un implant, et le premier axe étant orienté de manière parallèle à l'axe de la sortie.

L'ouverture centrale peut comprendre une entrée au niveau de l'extrémité supérieure de la partie coronaire, l'entrée étant sensiblement orientée suivant un troisième axe, et le deuxième axe peut être parallèle au troisième axe, ou le deuxième axe et le troisième axe peuvent présenter un deuxième angle non nul.

L'invention porte aussi sur un ensemble de restauration dentaire comprenant un élément de cicatrisation tel que décrit précédemment, un implant, une vis, et un capuchon, apte à obturer l'ouverture centrale pour former une surface terminale de l'élément de cicatrisation continue et sans aspérité.

L'invention porte aussi sur un système de restauration dentaire, caractérisé en ce qu'il comprend un élément de cicatrisation tel que décrit précédemment, un élément de prise d'empreinte numérique, notamment un scanner, et au moins un calculateur qui exploite les images provenant de la prise d'empreinte numérique pour une reconnaissance automatique, sur la base de la forme anatomique de l'élément de cicatrisation et/ou par la reconnaissance d'au moins un marqueur, du type d'élément de cicatrisation utilisé, à partir d'images d'une partie émergente de l'élément de cicatrisation.

L'invention porte aussi sur un procédé de restauration dentaire, caractérisé en ce qu'il comprend une étape de vissage en bouche d'un élément de cicatrisation tel que décrit précédemment à l'aide d'une vis, par le passage d'un outil, notamment un tournevis, au travers de l'ouverture centrale de l'élément de cicatrisation, de sorte à atteindre la vis et à permettre son vissage dans un implant.

Le procédé de restauration dentaire peut comprendre une étape de détermination d'un positionnement d'un implant dentaire, intégré à une structure osseuse d'un individu, à partir de l'identification et du positionnement d'un élément de cicatrisation tel que décrit précédemment, l'élément de cicatrisation étant fixé au niveau d'une de ses extrémités dans l'implant, l'élément de cicatrisation comprenant une surface latérale destinée à une intégration au sein d'une gencive pour mettre en forme la gencive lors de sa cicatrisation, et une surface terminale, une partie de la surface latérale et de la surface terminale formant une surface émergente, destinée à rester hors de la gencive, qui est asymétrique par rapport à au moins un plan médian pour présenter une forme anatomique.

### Description sommaire des dessins

Ces objets, caractéristiques et avantages de la présente invention seront exposés en détail dans la description suivante de deux modes de réalisation particuliers faits à titre non limitatif en relation avec les figures jointes parmi lesquelles :
La figure 1 est une vue en coupe d'un ensemble de restauration dentaire selon un premier mode de réalisation de l'invention.
Les figures 2A, 2B, 2C et 2D sont respectivement des vues d'un côté latéral droit, d'un côté lingual, d'un côté latéral gauche et d'un côté vestibulaire de l'ensemble de restauration dentaire selon le premier mode de réalisation.
La figure 2E est une vue en perspective de l'ensemble de restauration dentaire selon le premier mode de réalisation.
Les figures 3A, 3B, 3C et 3D sont respectivement des vues du côté latéral droit, du côté lingual, du côté latéral gauche et du côté vestibulaire d'un élément de cicatrisation de l'ensemble de restauration dentaire selon le premier mode de réalisation.
Les figures 4A, 4B, 4C, 4D et 4E sont respectivement des vues d'un côté latéral droit, d'un côté lingual, d'un côté latéral gauche, d'un côté vestibulaire, et en perspective de l'ensemble de restauration dentaire selon un deuxième mode de réalisation.
Les figures 5A, 5B, 5C et 5D sont respectivement des vues du côté latéral droit, du côté lingual, du côté latéral gauche et du côté vestibulaire d'un élément de cicatrisation de l'ensemble de restauration dentaire selon le deuxième mode de réalisation.
Les figures 6A, 6B, 6C et 6D sont respectivement une vue de côté, une vue de côté en coupe, une vue de côté en coupe et en éclaté, et une vue de côté en éclaté de restauration dentaire de l'ensemble de restauration dentaire selon le deuxième mode de réalisation.
Les figures 7A à 7D sont des vues schématiques d'étapes d'un procédé de restauration dentaire.
Les figures 8A à 8L sont des radiographies des dents superposées par des ensembles de restauration dentaire afin d'illustrer les avantages d'un ensemble de restauration dentaire selon l'invention par rapport à un ensemble de restauration dentaire standard.
Les figures 9A, 9B, 9C et 9D sont respectivement une vue de côté, une vue de côté en coupe, une vue de côté en coupe et en éclaté, et une vue de côté en éclaté de restauration dentaire de l'ensemble de restauration dentaire selon le deuxième mode de réalisation équipé d'un support de transfert d'empreinte.
La figure 9E est une vue en perspective d'un élément de cicatrisation selon une variante de réalisation de l'invention.
La figure 10A est une vue de côté d'un implant équipé d'un pilier de restauration dentaire et d'une prothèse sommitale.
La figure 10B est une vue de côté de l'implant équipé du pilier de restauration dentaire et de la prothèse sommitale superposée à une vue de l'implant équipé d'un élément de cicatrisation selon un mode de réalisation.

### Description d'un mode de réalisation

Dans la description qui va suivre, les mêmes références seront utilisées pour toutes les variantes de réalisations pour désigner les mêmes composants, voire leurs équivalents, afin de ne pas alourdir le texte et de faciliter sa lecture.

De plus, nous choisirons par convention un repère selon un axe défini en référence à un axe longitudinal d'un implant, l'adjectif « supérieur » désignant le côté de l'implant destiné à une orientation vers la gencive et l'adjectif « inférieur » désignant le côté opposé. Les mêmes adjectifs « inférieur » et « supérieur » seront utilisés pour tous les composants formant une restauration dentaire, en référence à la position qu'ils sont destinés à occuper lors de leur liaison avec un implant.

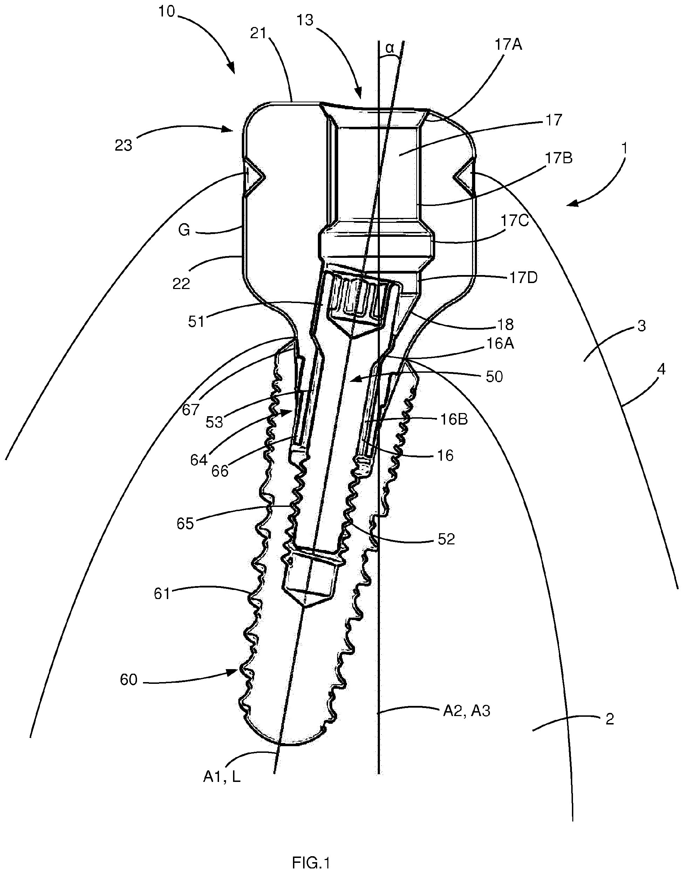

La figure 1 illustre un ensemble de restauration dentaire 1 comprenant un élément de cicatrisation 10 selon un premier mode de réalisation de l'invention, ainsi qu'une vis 50 et un implant 60, ce dernier étant intégré dans une structure osseuse 2 d'un patient, la structure osseuse étant recouverte de gencive 3.

Un tel ensemble de restauration dentaire participe à la mise en oeuvre d'un procédé de restauration dentaire qui peut comprend une première phase puis une deuxième phase.

Lors de la première phase, dite phase de cicatrisation, un ou plusieurs implant(s) sont intégrés dans la structure osseuse du patient par ostéointégration. Durant cette première phase, un élément de cicatrisation particulier est utilisé, comme cela va être détaillé par la suite. L'élément de cicatrisation 10, que l'on pourrait également dénommer "capuchon de cicatrisation", peut être fixé sur l'implant durant le temps nécessaire à la cicatrisation de la gencive et à l'ostéointégration de l'implant. L'élément de cicatrisation est donc un élément utilisé temporairement. Il recouvre l'implant tout en permettant une cicatrisation de la gencive. Il peut empêcher que l'implant soit recouvert par la gencive le temps de la cicatrisation. Il peut avoir en plus de sa fonction d'aide à la cicatrisation une fonction esthétique en comblant le trou formé par la dent retirée, le temps de la cicatrisation. L'élément de cicatrisation peut ne pas être destiné à former une prothèse utile à la mastication de manière à ne pas transmettre d'effort à l'implant au cours de son ostéointégration. A cet effet, il peut par exemple être prévu moins haut que les dents voisines. La conception de l'élément de cicatrisation peut être adaptée à une utilisation temporaire, généralement de l'ordre de quelques mois. L'élément de cicatrisation peut ensuite être aisément désolidarisé de l'implant auquel il est fixé.

La deuxième phase est une phase de restauration en tant que telle. Durant la deuxième phase, une prothèse définitive est mise en place sur le ou les implants par l'intermédiaire d'un pilier de restauration. La prothèse définitive remplace donc l'élément de cicatrisation.

La prothèse définitive peut être réalisée sur mesure pour s'intégrer parfaitement à la dentition du patient. Au contraire, l'élément de cicatrisation peut être un élément standard ou tout au moins disponible rapidement. Notamment l'élément de cicatrisation ne doit pas nécessairement être fabriqué sur mesure par un prothésiste.

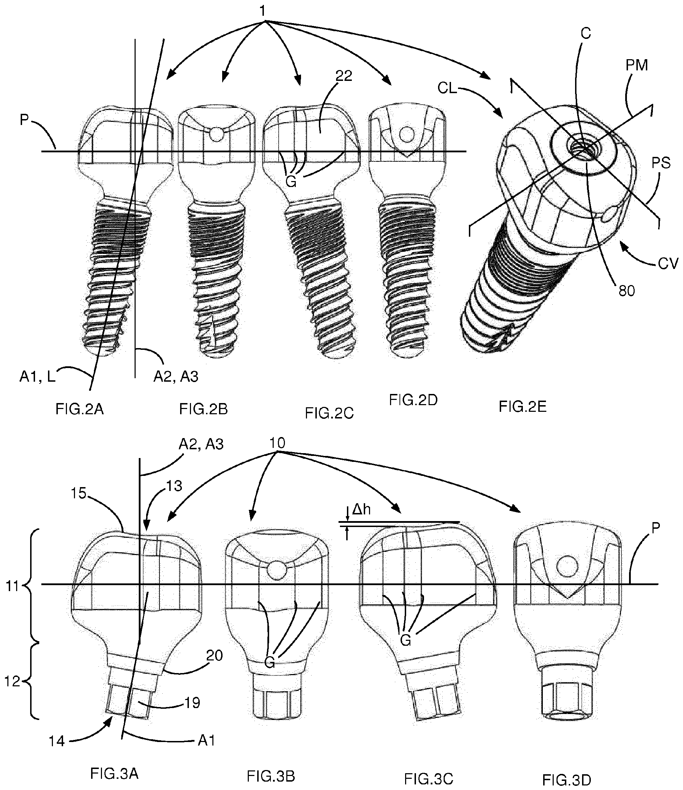

En référence aux figures 1, 2A, 2B, 2C, 2D et 2E, l'implant 60 comprend une enveloppe globale de forme cylindrique ou tronconique et un axe longitudinal L. Il présente avantageusement une symétrie de révolution par rapport à cet axe longitudinal, qui forme un axe de révolution. L'implant 60 comprend un moyen d'ancrage 61 dans la structure osseuse du patient. L'implant comprend une ouverture du côté de son extrémité supérieure à l'intérieur de laquelle se trouve un dispositif de connexion 64 avec l'élément de cicatrisation 10. Le dispositif de connexion 64 comprend une ouverture filetée 65, une ouverture de section hexagonale 66 dans le prolongement de l'ouverture filetée 65 et une portée conique 67 débouchant sur une face supérieure de l'implant. L'ouverture filetée 65, l'ouverture de section hexagonale 66 et la portée conique 67 sont adjacentes, coaxiales à l'axe longitudinal L et agencées de sorte que l'ouverture filetée 65 est du côté inférieur de l'implant 60, la portée conique 67 est du côté supérieur de l'implant 60 et l'ouverture de section hexagonale 66 est dans une position intermédiaire entre l'ouverture filetée 65 et la portée conique 67.

Les figures 3A, 3B, 3C et 3D illustrent un élément de cicatrisation 10 selon un premier mode de réalisation. L'élément de cicatrisation 10 est monobloc, c'est-à-dire qu'il est constitué d'une seule pièce et de préférence à partir d'un unique matériau. Comme illustré sur la figure 3A, l'élément de cicatrisation 10 comprend une partie supérieure, dite partie coronaire 11, destinée à être en contact avec la gencive 3 du patient, autrement dit, destinée à une intégration au sein d'une gencive pour mettre en forme la gencive lors de sa cicatrisation. L'élément de cicatrisation 10 comprend également une partie inférieure, dite partie implantaire 12, destinée à être introduite dans l'ouverture de l'implant pour coopérer avec le dispositif de connexion 64 et permettre la fixation de l'élément de cicatrisation 10 sur l'implant 60.

L'élément de cicatrisation comprend une ouverture centrale 13, traversante et destinée à recevoir la vis 50 vissée dans l'ouverture filetée 65 de l'implant. L'ouverture centrale forme donc un puits pour la vis 50. L'élément de cicatrisation est destiné à être fixé sur l'implant par l'intermédiaire de la vis 50. L'ouverture centrale 13 comprend une sortie 14 au niveau de la partie implantaire 12 sensiblement orientée dans la direction d'un premier axe A1. Autrement dit, la sortie 14 correspond à l'embouchure inférieure de l'ouverture centrale 13, dont la partie inférieure est sensiblement cylindrique et orientée selon le premier axe A1. La partie implantaire 12 étant destinée à une liaison avec un implant 60, ce premier axe A1 est destiné à un alignement avec l'axe longitudinal L d'un implant. Ainsi, la partie implantaire 12 de l'élément de cicatrisation, notamment au moins sa partie inférieure, est globalement orientée selon le premier axe A1. L'ouverture centrale 13 comprend de plus une entrée 15 en partie supérieure de l'élément de cicatrisation, prévue pour l'insertion de la vis 50.

La partie coronaire 11 s'étend globalement dans la direction d'un second axe A2. Autrement dit, la forme extérieure de la partie coronaire 11 se développe, ou se déploie, depuis une frontière entre la partie implantaire et la partie coronaire, en direction du second axe A2. En fonction de la géométrie particulière de la partie coronaire, le deuxième axe A2 peut être défini de différentes manières.

Tout d'abord, tout ou partie de la surface latérale 22 de la partie coronaire 11, notamment au niveau de sa partie supérieure, est avantageusement définie par un ensemble de génératrices G, parallèles entre elles. Le deuxième axe A2 est dans ce cas défini en référence à l'orientation de cet ensemble de génératrices G, c'est-à-dire comme un axe parallèle à ces génératrices G. En effet, comme cela apparait par exemple sur les figures 2A à 3D, la partie coronaire 11 comprend une surface latérale définie par un ensemble de génératrices G parallèles.

En variante, dans le cas d'une surface latérale 22 de la partie coronaire 11 plus complexe, non définie par des génératrices parallèles, il est possible de se référer au cylindre à section circulaire le plus proche de la partie coronaire, particulièrement de la partie supérieure de la partie coronaire, dans lequel elle est inscrite. Le deuxième axe A2 correspond ainsi à l'axe de ce cylindre le plus proche.

Selon une autre approche, dans le cas où les sections transverses, perpendiculairement au deuxième axe A2, de la partie coronaire, au moins dans sa partie supérieure, présentent un centre, ce deuxième axe A2 comprend ces différents centres.

Selon l'invention, le premier axe A1 et le deuxième axe A2 ne sont pas alignés, c'est-à-dire qu'ils ne sont pas parallèles. Autrement dit, le premier axe A1 et le deuxième axe A2 forment un premier angle α non nul. Ainsi, l'élément de cicatrisation est angulé, ses deux parties implantaire et coronaire présentant une orientation différente.

Avantageusement, l'angle α entre le premier axe A1 et le deuxième axe A2 est compris entre 5 et 30 degrés. Dans le premier mode de réalisation illustré sur les figures 1 à 3D, l'angle α est égal à 10 degrés. Une telle valeur permet de conserver une insertion et un pivotement aisé de la vis 50 à l'intérieur de l'ouverture centrale 13. Lorsque l'élément de cicatrisation est fixé sur l'implant 60, le premier axe A1 est confondu avec l'axe longitudinal L de l'implant. Cet assemblage est notamment illustré sur la figure 1 et sur la figure 2A. Cet assemblage est obtenu en vissant la vis 50 dans l'implant 60, au travers de l'ouverture centrale 13 de l'élément de cicatrisation 10, par exemple au moyen d'un tournevis.

En remarque, dans ce premier mode de réalisation, le deuxième axe A2 correspond aussi à l'orientation de l'entrée 15 de l'ouverture centrale 13, qui est sensiblement agencée en partie centrale de la surface terminale 21 qui forme la surface supérieure de l'élément de cicatrisation. L'entrée 15 correspond à l'embouchure supérieure de l'ouverture centrale 13, dont la partie supérieure est sensiblement cylindrique et orientée selon un troisième axe A3. Dans ce premier mode de réalisation, le deuxième axe A2 peut être défini comme un axe parallèle à ce troisième axe A3. Autrement dit, dans cette configuration particulière de l'entrée 15, les deux axes A2 et A3 sont parallèles, et le deuxième axe A2 peut se définir à partir du troisième axe A3 de l'entrée 15 l'ouverture centrale.

Sur la figure 1, on observe que l'ouverture centrale 13 de l'élément de cicatrisation 10 comprend un premier tronçon 16 à hauteur de la partie implantaire 12, orienté selon le premier axe A1 et un deuxième tronçon 17 à hauteur de la partie coronaire 11 orienté selon le troisième axe A3. Le premier tronçon s'étend de la sortie 14 jusqu'au deuxième tronçon avec lequel il communique. De même, le deuxième tronçon s'étend de l'entrée 15 jusqu'au premier tronçon. L'ouverture centrale forme un coude 18 ou une portion courbée à l'interface entre le premier tronçon et le deuxième tronçon. Le coude 18 est positionné sensiblement à hauteur de la limite entre la partie implantaire 12 et la partie coronaire 11 de l'élément de cicatrisation.

Le deuxième tronçon 17 comprend un ensemble de sections de forme circulaire et centrées sur le troisième axe A3. En parcourant le deuxième tronçon 17 depuis l'entrée 15 en direction du coude 18, on relève qu'il est constitué d'une première section 17A de forme tronconique, suivie d'une deuxième section 17B de forme cylindrique, suivie d'un élargissement 17C, suivi par une troisième section 17D de forme cylindrique. Cette troisième section 17D communique avec le coude 18. L'élargissement 17C est une section du deuxième tronçon dont le diamètre est plus grand que le diamètre des sections positionnées de part et d'autre de cet élargissement. Il permet à la vis 50 de pivoter à l'intérieur de l'élément de cicatrisation lors de sa mise en place. La vis 50 peut donc pivoter d'une orientation parallèle au troisième axe A3 jusqu'à une orientation parallèle au premier axe A1. Pour rappel, dans ce premier mode de réalisation, le deuxième axe A2 et le troisième axe A3 sont alignés, ce qui ne sera pas le cas du deuxième mode de réalisation décrit plus bas.

De même, le premier tronçon 16 comprend un ensemble de sections de forme circulaire et centrées sur le premier axe A1. En parcourant le premier tronçon 16 depuis le coude 18 en direction de la sortie 14, on relève qu'il est constitué d'une portée conique 16A formant une première section de forme tronconique, suivie d'une deuxième section 16B de forme cylindrique. La portée conique 16A est destinée à coopérer avec une portion conique (autrement dit tronconique) d'une tête de vis 51 de la vis 50, de forme complémentaire, de manière à former une interface étanche.

La vis 50 comprend une tête de vis 51, une partie filetée 52, et une partie cylindrique 53. La partie cylindrique 53, non filetée, est agencée entre la partie filetée 52 et la tête de vis 51. La partie filetée 52 est destinée à collaborer avec l'ouverture filetée 65 de l'implant pour bloquer en position l'élément de cicatrisation. La partie cylindrique 43 de la vis est destinée à être positionnée au niveau de la deuxième section 16B du premier tronçon 16 de l'ouverture centrale 13 de l'élément de cicatrisation. L'élément de cicatrisation et la vis peuvent être livrés préassemblés ce qui réduit la quantité de manipulations pour le dentiste.

L'élément de cicatrisation 10 comprend à son extrémité inférieure et sur un pourtour extérieur une portion de section hexagonale 19, apte à coopérer avec l'ouverture de section hexagonale 66 de l'implant. L'interface ainsi formée permet de garantir une fixation de l'élément de cicatrisation 10 à orientation fixe, sans rotation de l'élément de cicatrisation autour de l'implant 60. En remarque, la coopération des sections hexagonales permet d'envisager six positions distinctes d'un même élément de cicatrisation par rapport à l'implant. Ces positions se distinguent par des rotations de 60 degrés de l'élément de cicatrisation autour du premier axe A1. Le dentiste pourra identifier l'orientation qui convient au mieux à l'anatomie du patient. La portion de section hexagonale 19 et l'ouverture de section hexagonale 66 sont des éléments anti-rotationnels qui pourraient être remplacés par tous autres éléments anti-rotationnels équivalents. En variante d'une section hexagonale, l'élément de cicatrisation pourrait comprendre tout autre motif apte à coopérer avec un implant présentant un motif complémentaire pour réaliser une fonction anti-rotation. Ce motif pourrait par exemple comprendre un polygone avec plus de six côtés de manière à offrir des choix d'orientation de l'élément de cicatrisation se distinguant les uns des autres par une rotation d'angle inférieure à 60 degrés. Ce motif pourrait également comprendre un ensemble de créneaux aptes à coopérer avec des créneaux complémentaires agencés sur l'implant.

L'élément de cicatrisation comprend ainsi un dispositif de fixation sur implant à son extrémité inférieure. En outre, l'élément de cicatrisation comprend également sur le pourtour extérieur de sa partie implantaire 12 une portion tronconique 20 ou sensiblement tronconique, apte à coopérer avec la portée conique 67 de l'implant pour former une interface étanche entre l'implant et l'élément de cicatrisation. La portée conique 67 et la portion tronconique 20 ont une fonction de cône d'étanchéité et également une fonction de positionnement unique de l'élément de cicatrisation par rapport à l'implant. En effet, l'assemblage de la portée conique 67 avec la portion tronconique 20, réduit à zéro tout jeu en translation entre l'élément de cicatrisation et l'implant, après le serrage de la vis 40. De plus, comme une rotation de l'élément de cicatrisation par rapport à l'implant est impossible grâce à l'interface constituée par la portion de section hexagonale 19 et l'ouverture de section hexagonale 66, la liaison entre l'élément de cicatrisation 10 et l'implant 60 est une liaison particulièrement rigide.

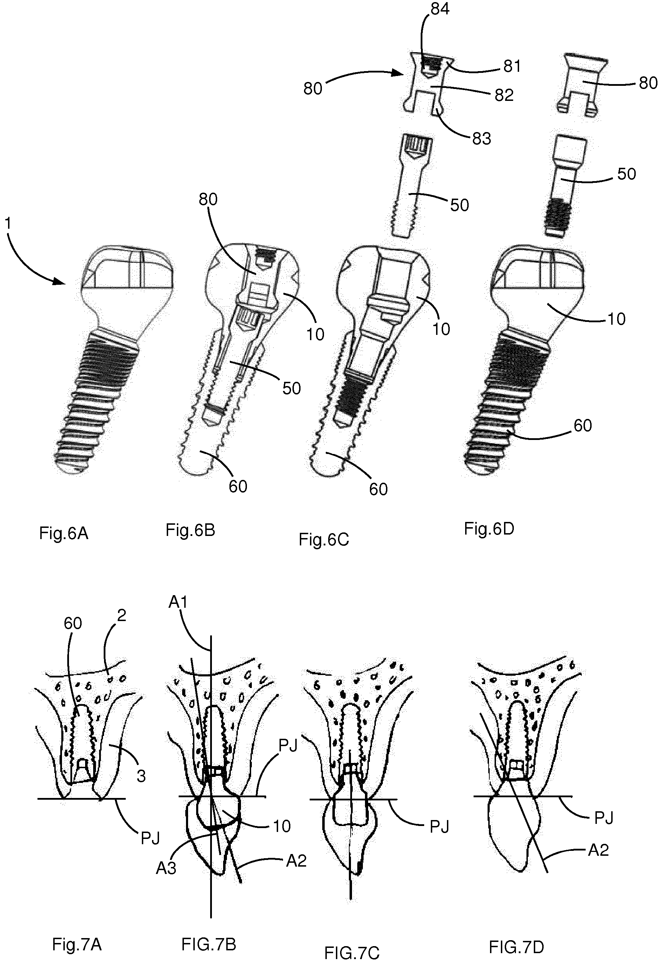

En référence à la figure 2E, l'ensemble de restauration dentaire 1 comprend un capuchon 80 apte à obturer l'entrée 15. Ce capuchon, est également visible sur les figures 6B, 6C et 6D illustrant un deuxième mode de réalisation de l'invention. Le capuchon 80 comprend une tête tronconique 81, un corps cylindrique 82 et un élément de liaison mâle 83. La tête tronconique 81 coopère avec la première section 17A de forme tronconique de l'élément de cicatrisation pour former une interface étanche entre le capuchon 80 et l'élément de cicatrisation, au niveau de sa surface supérieure. Le corps cylindrique s'étend le long de la deuxième section 17B de l'élément de cicatrisation lorsque le capuchon est en place. L'élément de liaison mâle 83 coopère avec l'élargissement 17C pour former une liaison de type clippage. Le capuchon 80 comprend également une ouverture 84 borgne et filetée sur sa face supérieure. Cette ouverture 84 offre une prise à un outil spécifiquement adapté pour retirer le capuchon par traction. En remarque, cette ouverture 84 est de faible dimension si bien qu'un volume limité de corps étrangers pourrait s'y loger. Cette ouverture 84 peut également être rebouchée par une pâte de colmatage adaptée, ou fermée par un deuxième capuchon en période de cicatrisation pour former une surface supérieure de l'élément de cicatrisation continue, sans aspérité.

Les implants existants peuvent avoir des formes différentes et notamment des dispositifs de connexion à des éléments de restauration dentaire différents. Il peut exister autant d'éléments de restauration dentaire différents que de dispositifs de connexion différents, afin de pouvoir disposer, pour chaque implant existant, d'un élément de cicatrisation doté d'un dispositif de connexion qui lui est adapté.

L'élément de cicatrisation 10 a pour fonction de venir se loger au sein de la gencive incisée, après fixation d'un implant. Dans cette configuration, l'implant 60 est solidarisé à la structure osseuse 2. Il n'émerge pas ou alors faiblement de la partie osseuse dans la gencive 3. L'élément de cicatrisation 10 est fixé à l'implant 60 de sorte que la gencive 63 est presque exclusivement en contact avec l'élément de cicatrisation 10. L'élément de cicatrisation peut comprendre au moins un plan sensiblement perpendiculaire au deuxième axe A2 définissant un contour à 360° de l'élément de cicatrisation qui est intégralement en contact avec la gencive. De manière plus générale, l'élément de cicatrisation peut comprendre une ligne s'étendant à 360° autour de l'élément de cicatrisation, sur la surface latérale 22 de la partie coronaire 11, qui est intégralement en contact avec la gencive. Une partie significative de la hauteur de l'élément de cicatrisation, notamment de sa surface latérale 22, est de plus avantageusement en contact avec la gencive. Au moins la moitié de sa hauteur peut ainsi être avantageusement en contact avec la gencive, sur au moins un axe sensiblement parallèle au deuxième axe A2 le long de la surface latérale de l'élément de cicatrisation. L'élément de cicatrisation participe temporairement au procédé de restauration, en remplissant la fonction de cicatrisation de la gencive. Il peut aussi participer à la fabrication sans heurt de la prothèse définitive, comme cela sera détaillé par la suite.

Comme évoqué précédemment, la partie coronaire 11 de l'élément de cicatrisation comprend une surface terminale 21 au travers de laquelle débouche l'entrée 15 de l'ouverture centrale 13 et une surface latérale 22 autour de laquelle la gencive 3 est destinée à se cicatriser. La surface latérale 22 est choisie pour correspondre au mieux au milieu buccal du patient. La surface terminale 21 de l'élément de cicatrisation est destinée à rester visible au-dessus de la surface gingivale 4 de la gencive 3, puisque la gencive reste intégralement en contact avec la surface latérale 22 de l'élément de cicatrisation. La surface terminale 21 est orientée sensiblement perpendiculairement au deuxième axe A2. Ainsi lorsque l'élément de cicatrisation est fixé à l'implant dans la bouche du patient, la surface terminale 21 est inclinée par rapport à l'axe de l'implant. Avantageusement le dentiste pourra orienter l'élément de cicatrisation de sorte à ce que la surface terminale 21 soit tournée vers l'intérieur de la bouche selon une inclinaison correspondant à l'angle α. Une telle inclinaison permet de masquer, ou tout au moins de rendre moins facilement apparente l'ouverture centrale 13 ou la tête de vis 51. La partie haute de la surface latérale 22 et la surface terminale 21 forment donc une surface émergente 23 de l'élément de cicatrisation. Cette surface émergente est notamment illustrée sur la figure 1.

En référence à la figure 2E, on constate que la forme de la surface terminale 21 de l'élément de cicatrisation a une forme asymétrique. On désigne par côté lingual CL, la partie de la surface latérale 22 orientée vers l'intérieur de la bouche, c'est à dire vers la langue du patient. De même, On désigne par côté vestibulaire CV, la partie de la surface latérale 22 orientée vers l'extérieur de la bouche, c'est à dire vers la lèvre du patient. Le côté vestibulaire de l'élément de cicatrisation est plus large que le côté lingual. La surface terminale 21 peut avoir sensiblement la forme d'un trapèze. Par conséquent, la partie intérieure (linguale CL) et la partie extérieure (vestibulaire CV) de l'élément de cicatrisation présentent une forme différente.

La forme de l'élément de cicatrisation présente des angles arrondis et des côtés courbés, pour garantir de ne pas heurter la gencive. De plus, la surface terminale 21 de chaque élément de cicatrisation présente, à l'exception de l'ouverture centrale 13, une surface continue, sans reliefs, et/ou sans partie creuse, et/ou sans gorge, et/ou sans arrête, et/ou sans aspérité. Cette surface est convexe. Cette géométrie sans aspérité est favorable à l'hygiène buccale, réduit l'accumulation d'aliments et le dépôt de la plaque dentaire.

Grâce à l'utilisation du capuchon 80, la surface terminale 21 est sensiblement continue, même au niveau de l'entrée 15. Ainsi, cette surface terminale fermée par le capuchon 80 présente sensiblement la propriété de surface continue, sans reliefs, et/ou sans partie creuse, et/ou sans gorge, et/ou sans arrête, et/ou sans aspérité. Un tel capuchon permet de garantir une bonne hygiène bucco-dentaire, puisque l'élément de cicatrisation est destiné à rester en bouche pendant la phase de cicatrisation, étant seul en contact avec la gencive et non protégé des agressions buccales.

En complément, la section transverse d'un élément de cicatrisation au niveau de sa surface latérale 22, c'est-à-dire la section selon un plan sensiblement perpendiculaire au deuxième axe A2, pourrait prendre toute autre forme anatomique, notamment elle pourrait s'approcher de tout polygone, comme un polygone à trois, quatre, cinq ou six côtés. En variante, les angles de ces polygones pourraient être si arrondis que la forme globale s'approcherait d'une forme oblongue, voire de section d'ovoïde, voire de toute autre forme plus éloignée d'un polygone. Cette section de surface latérale 22 et la surface terminale 21 (et/ou sa projection sur un plan perpendiculaire au deuxième axe A2) présentent finalement une forme identique ou similaire, puisqu'elles viennent en continuité l'une de l'autre.

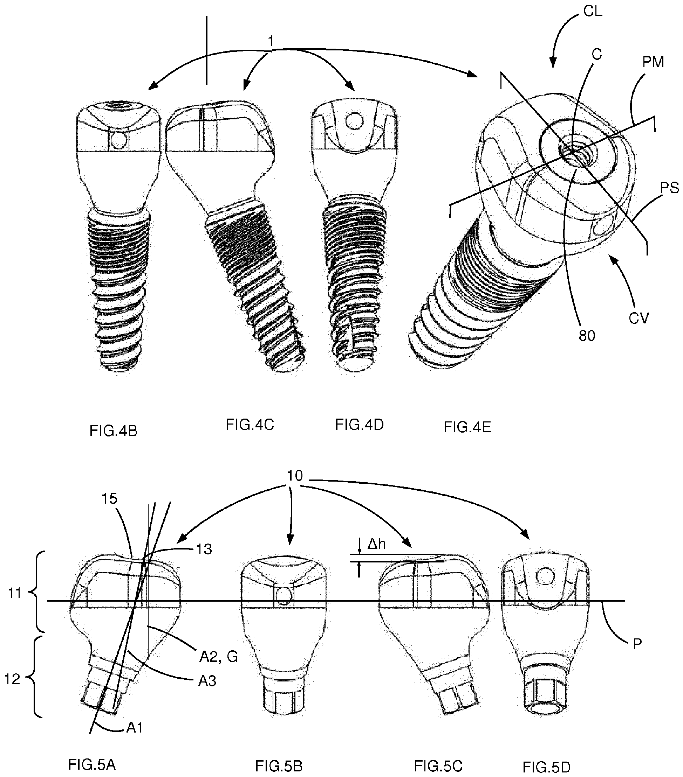

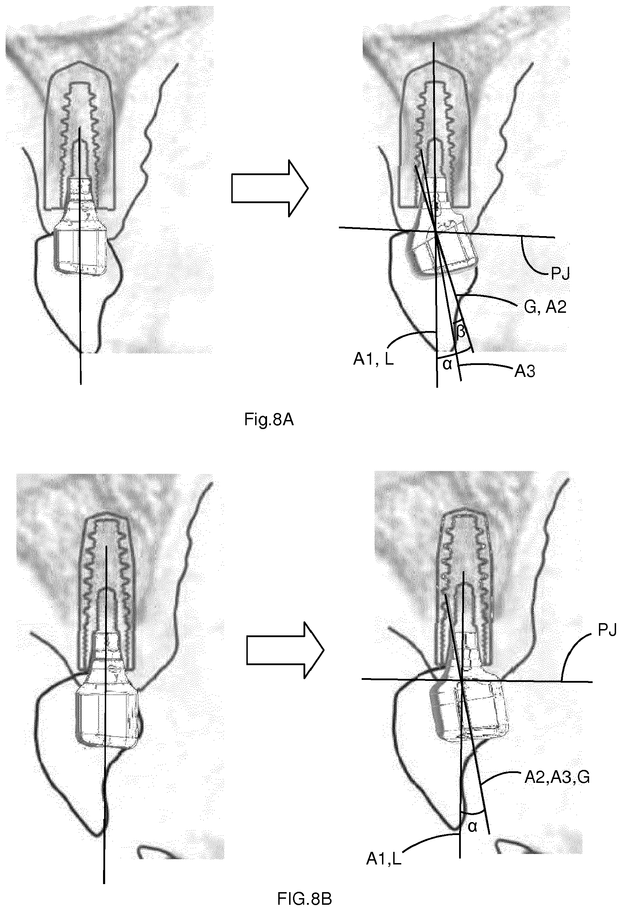

Selon le mode de réalisation, la géométrie de la surface émergente visible de l'élément de cicatrisation du côté de l'intérieur de la bouche diffère de la géométrie du côté de l'extérieur, pour tenir compte de la courbure de la gencive et/ou de la forme naturelle des dents. On peut définir un plan justogingival PJ comme le plan dans lequel s'étend la gencive au niveau de l'émergence des dents. Le plan justogingival est notamment représenté à titre d'exemple sur les figures 8A à 8L. La forme de la surface émergente de l'élément de cicatrisation est asymétrique par rapport au moins un plan médian, perpendiculaire au plan justogingival et passant par un centre C de la surface terminale 21. Notamment, l'élément de cicatrisation est asymétrique par rapport au plan médian PM illustré sur les figures 2E et 4E. Le plan médian PM mentionné ci-dessus délimite le côté lingual du côté vestibulaire de l'élément de cicatrisation.

D'une part, l'asymétrie peut être caractérisée par une hauteur suivant le deuxième axe A2 de la partie coronaire de l'élément de cicatrisation du côté lingual, supérieure à la hauteur de l'élément de cicatrisation du côté vestibulaire. Une telle différence de hauteur Δh est particulièrement visible sur la figure 3C ou la figure 5C. Par ailleurs, en considérant la projection de la partie coronaire, particulièrement sa partie terminale et/ou émergente, de l'élément de cicatrisation sur un plan transverse P, perpendiculaire au deuxième axe A2, l'asymétrie peut être caractérisée par une forme non circulaire du contour de cette projection. Autrement dit, cette section présente au moins un axe passant au centre de la section et définissant un axe de non symétrie de la section.

Selon les modes de réalisation présentés, la partie coronaire de l'élément de cicatrisation comprend un unique plan de symétrie PS (voir figures 2E et 4E). Ainsi, chaque élément de cicatrisation est aussi bien adapté à une intégration dans la partie gauche ou dans la partie droite de la dentition d'un patient. En variante, un élément de cicatrisation pourrait ne comprendre aucun plan de symétrie et être spécifiquement adapté soit au côté droit, soit au côté gauche de la dentition du patient.

Finalement, la surface émergente d'un élément de cicatrisation peut prendre toute forme tridimensionnelle identifiable, permettant de reconnaître l'élément de cicatrisation utilisé et éventuellement de connaître son orientation, pour remplir une seconde fonction qui sera détaillée par la suite en plus de permettre la cicatrisation de la gencive selon une forme anatomique.

L'élément de cicatrisation peut se trouver en matériau plastique, compatible avec une utilisation médicale, et de couleur rose, blanche ou crème. En particulier l'élément de cicatrisation peut être fabriqué à partir d'un matériau polymère, notamment à partir d'un matériau « PEEK ». En variante, il peut être en métal, par exemple en titane, ou il peut être en zircone. Effectivement, cet élément de cicatrisation 10 peut être en titane avec un traitement de surface réalisé à partir de nitrure de zircone afin notamment d'améliorer la visibilité de cet élément 10 par des scanners buccaux et ce, tout en étant biocompatible. L'élément de cicatrisation peut être fabriqué par usinage et/ou par moulage et/ou par addition de matière, autrement dit par impression 3D.

L'utilisation des éléments de restauration dentaire permet donc de favoriser une cicatrisation idéale de la gencive dans le cadre d'un procédé de restauration dentaire du fait de sa géométrie conçue en phase avec l'anatomie buccale. En remarque, cet élément de cicatrisation peut en variante être totalement sous-gingival et invisible, puis rendu visible par intervention sur la gencive. Dans ce cas, la partie extrême de l'élément de cicatrisation sera toujours appelée abusivement partie émergente.

La forme de la partie coronaire de l'élément de cicatrisation est spécifiquement choisie pour favoriser la cicatrisation de la gencive, selon une forme anatomique correspondant au mieux à la dent à remplacer et par conséquent aussi à la future prothèse sommitale destinée à occuper cet espace buccal.

Avantageusement, le dentiste peut disposer d'une panoplie d'éléments de restauration dentaire prêts à l'emploi. Les éléments de restauration dentaire de la panoplie se distinguent par différentes tailles et avec différentes valeurs d'angle α. L'angle α est de préférence supérieur ou égal à 10°. Le dentiste pourra sélectionner l'élément de cicatrisation convenant le mieux à la géométrie buccal du patient. Une coloration de la vis ou du capuchon peut permettre d'identifier rapidement la taille et/ou l'angle α d'un élément de cicatrisation donné. Ainsi, le dialogue entre dentistes et prothésistes peut être simplifié.

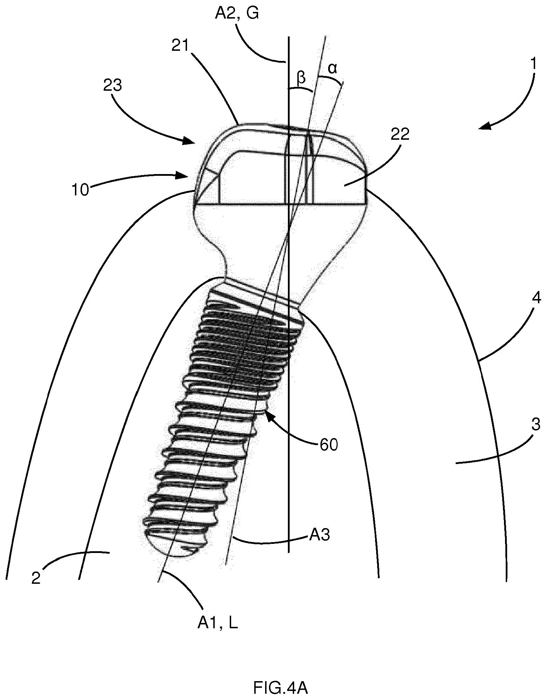

Nous allons à présent décrire le deuxième mode de réalisation de l'ensemble de restauration dentaire en référence aux figures 4A à 4E et 5A à 5E en détaillant les différences avec le premier mode de réalisation.

Selon le deuxième mode de réalisation, le deuxième axe A2, notamment correspondant à l'ensemble des génératrices G dans ce mode de réalisation, le premier axe A1, suivant lequel est orienté la sortie 14, et le troisième axe A3, suivant lequel est orienté l'entrée 15, sont tous les trois distincts, c'est-à-dire qu'ils ne sont pas parallèles entre eux. L'angle α désigne l'angle formé entre le deuxième axe A2 et le premier axe A1. On définit un deuxième angle β, comme l'angle formé entre le deuxième axe A2 et le troisième axe A3. L'angle β peut être compris par exemple entre 0 degrés et 30 degrés. En remarque le premier mode de réalisation correspond à un élément de cicatrisation dont l'angle β est nul. Selon le deuxième mode de réalisation, l'angle β est égal à environ 10 degrés et l'angle α est égale à environ 20 degrés. Avantageusement, l'angle β peut être formé dans la même direction que l'angle α, autrement dit dans le même plan que l'angle α, de sorte que l'angle formé entre le premier axe A1 et le troisième axe A3 peut être obtenu à partir des deux angles α et β. Ainsi, le deuxième mode de réalisation de l'élément de cicatrisation comprend un angle formé entre le premier axe A1 et le troisième axe A3 égal à 10 degrés. Avantageusement, la panoplie d'éléments de restauration dentaire prêts à l'emploi est complétée par des d'éléments de restauration dentaire différentes valeurs d'angle.

Les figures 7A à 7C illustrent schématiquement une étape de choix d'un élément de cicatrisation particulier au cours d'un procédé de restauration dentaire. Dans un premier temps comme illustré sur la figure 7A, l'implant 60 est fixé à la structure osseuse 2 du patient. Puis, le dentiste choisit parmi la panoplie d'éléments de restauration dentaire à sa disposition l'élément de cicatrisation convenant au mieux à la forme de la dent à remplacer. Il peut recourir à un élément de cicatrisation selon l'invention comme illustré sur la figure 7B ou à un élément de cicatrisation selon l'état de la technique comme illustré sur la figure 7C. On observe que pour un élément de cicatrisation selon l'état de la technique, tel qu'illustré sur la figure 7C, l'ouverture centrale est orientée du côté vestibulaire. C'est-à-dire que l'ouverture centrale débouche sur une face de la dent tournée vers l'extérieur de la bouche. L'ouverture centrale est donc facilement visible. En revanche, pour un élément de cicatrisation selon l'invention, tel qu'illustré sur la figure 7B, l'ouverture centrale 13 est orientée du côté lingual. L'ouverture centrale débouche sur une face de la dent tournée vers l'intérieur de la bouche est donc moins facilement visible. Il est donc préférable de choisir un élément de cicatrisation selon l'invention pour optimiser l'esthétique de la dentition du patient. La figure 7D illustre la prothèse définitive à l'issue du procédé de restauration dentaire. La prothèse définitive peut être fixée à l'implant au moyen d'une vis passant par un puits de vis de la prothèse définitive. Ce puits de vis peut être orienté parallèlement au second axe A2.

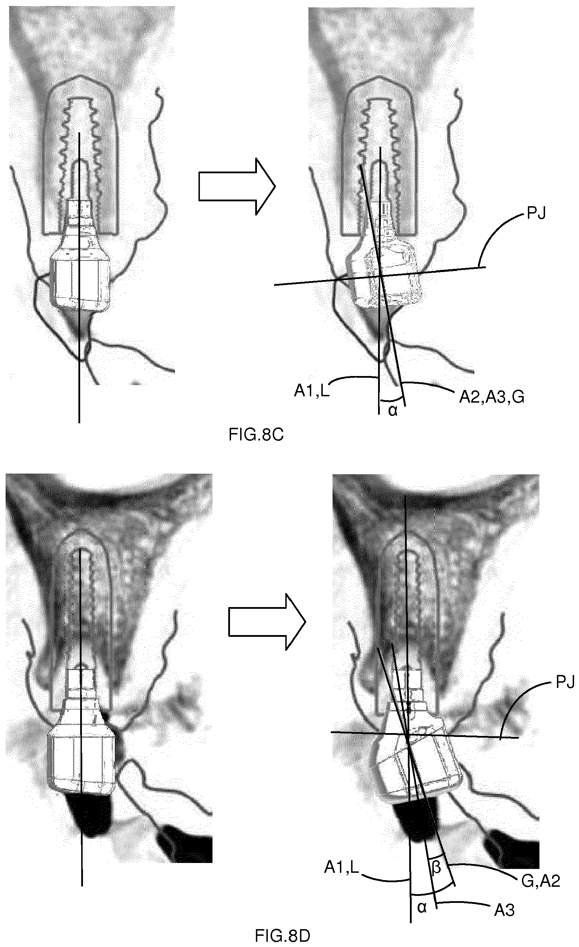

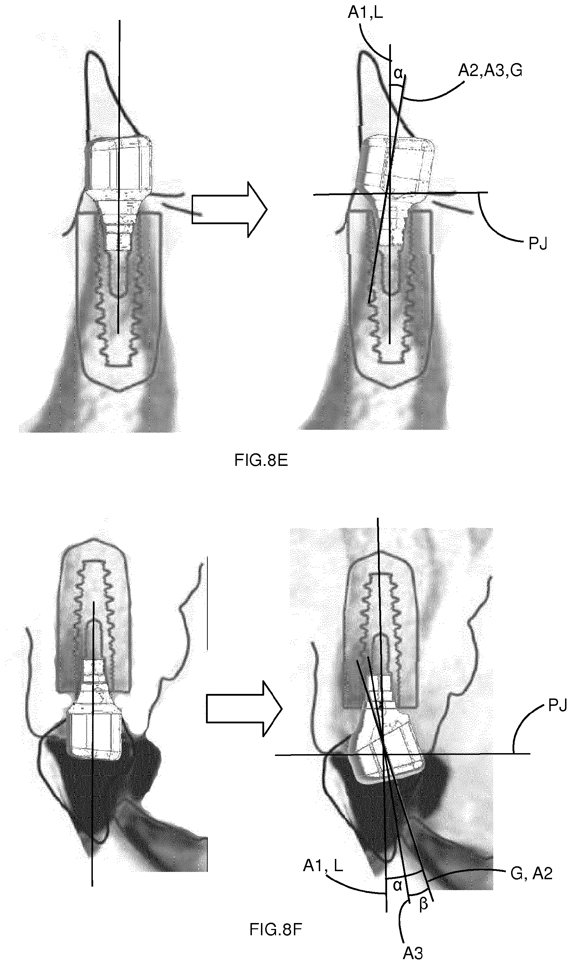

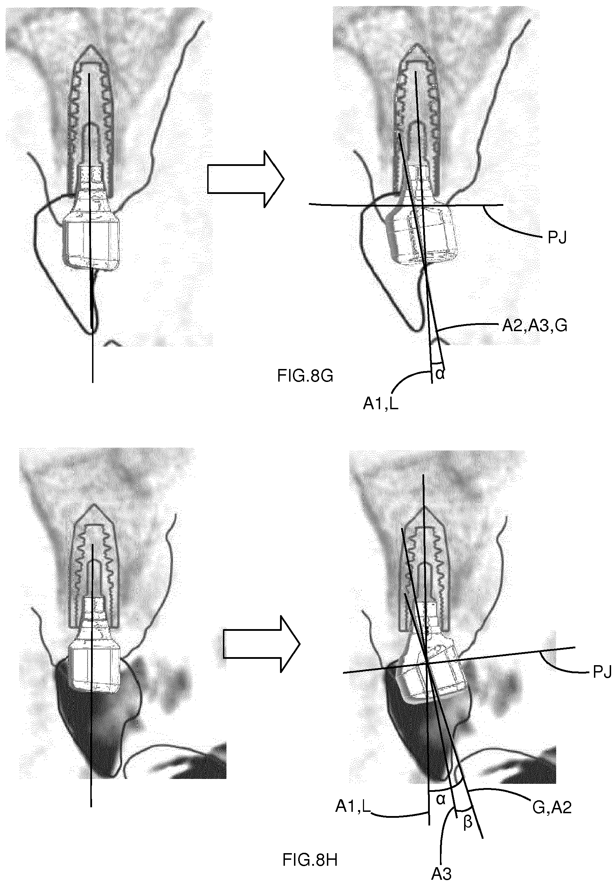

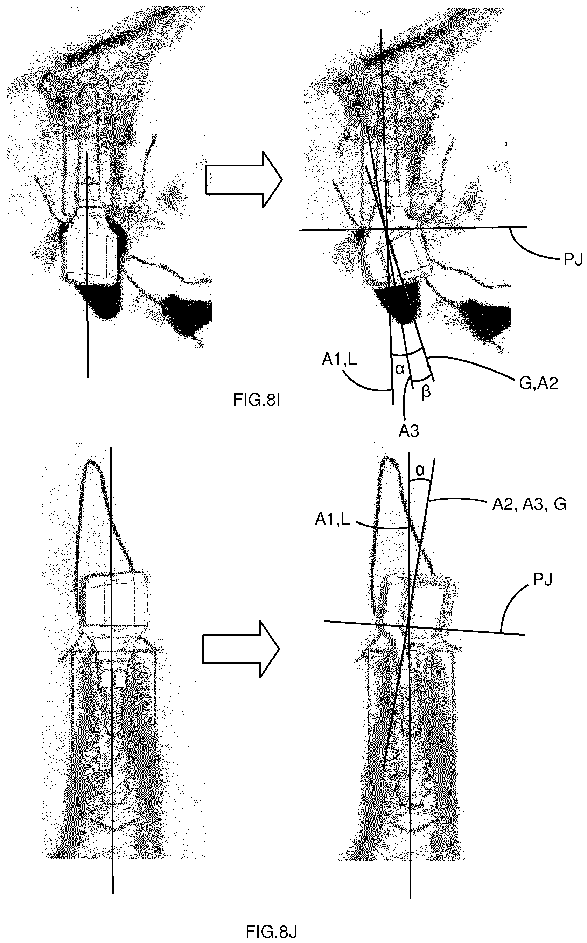

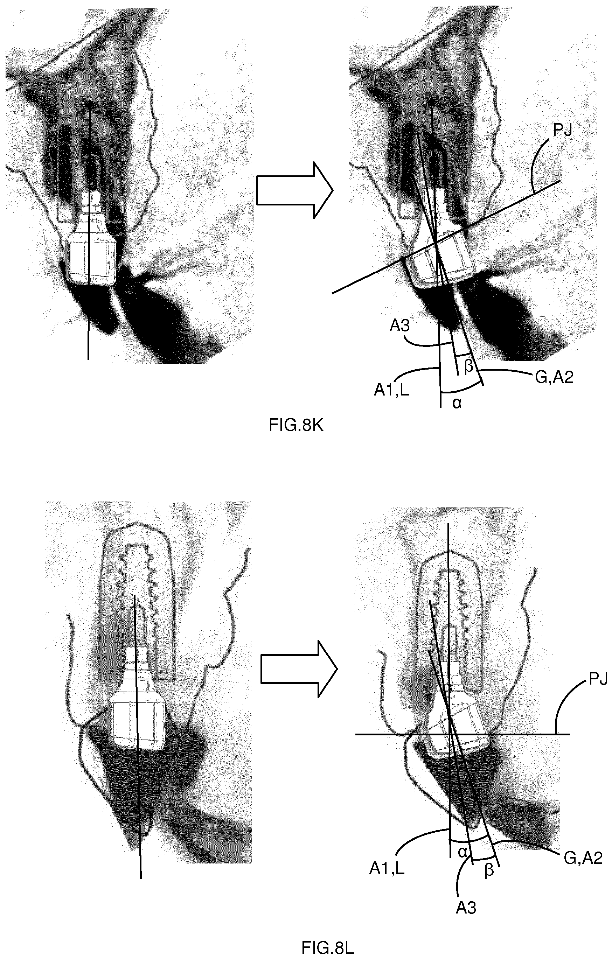

Les figures 8A à 8L illustrent, à titre d'exemple, douze cas pratiques dans lesquels un élément de cicatrisation selon l'invention est avantageusement utilisé. Plus particulièrement, dans les cas illustrés sur les figures 8B, 8C, 8E, 8G, et 8J, on a utilisé un élément de cicatrisation selon le premier mode de réalisation de l'invention. Dans les cas illustrés sur les figures 8A, 8D, 8F, 8H, 8I, 8K et 8L, on a utilisé un élément de cicatrisation selon le deuxième mode de réalisation de l'invention. Pour chaque figure, on illustre, avec une superposition d'une image radiographique, le remplacement d'un élément de cicatrisation standard (visible à gauche sur chaque figure) par un élément de cicatrisation selon l'invention (visible à droite sur chaque figure). On constate que la surface terminale 21 et l'entrée 15 sont orientées vers l'intérieur de la bouche. Ainsi on évite que le capuchon 80 soit visible de l'extérieur, ce qui permet d'améliorer l'esthétique du patient. De plus, l'utilisation d'un élément de cicatrisation selon l'invention favorise la formation ou la cicatrisation de la gencive selon une forme anatomique ce qui améliore encore l'esthétisme. On remarque notamment que le volume de gencive du côté vestibulaire est plus important lorsqu'on utilise un élément de cicatrisation selon l'invention. Par ailleurs, l'axe d'émergence de la partie coronaire, c'est-à-dire l'orientation du deuxième axe A2, correspond mieux à la future dent. En effet, comme on peut le constater en observant la position de la dent originale, une inclinaison vers l'intérieur de la bouche de la partie coronaire permet de mieux reproduire l'inclinaison naturelle d'une dent. La prothèse définitive, remplaçant l'élément de cicatrisation à l'issue de la phase de cicatrisation, comprend un puits de vis apte à coopérer avec une vis pour sa fixation à l'implant. Le puits de vis de la prothèse définitive est également orienté parallèlement au deuxième axe A2 pour reproduire l'inclinaison naturelle de la dent.

Outre les avantages décrits précédemment, l'élément de cicatrisation permet la mise en oeuvre d'un procédé de restauration avantageux, et d'un procédé de fabrication d'une prothèse dentaire et d'un pilier définitif, avec un traumatisme minimal de la gencive. En effet, il est possible d'obtenir une empreinte numérique ou physique de la zone à restaurer sans retirer l'élément de cicatrisation en bouche, donc sans heurter la gencive. Ainsi, en plus de sa première fonction de cicatrisation, détaillée précédemment, l'élément de cicatrisation remplit une seconde fonction lors du procédé de restauration, en permettant la définition avantageuse de la forme du pilier de restauration et/ou de la prothèse avant son retrait. Cette fonction est complémentaire de sa première fonction de cicatrisation puisqu'elle permet de ne pas traumatiser la gencive après sa cicatrisation selon une forme anatomique avantageuse choisie.

Pour cela, en fin de la phase de cicatrisation du procédé de restauration dentaire, un praticien peut prendre une empreinte numérique de la bouche du patient, sans retirer l'élément de cicatrisation. Les données de numérisation, obtenues par tout appareil comme un scanner buccal par exemple, sont transmises automatiquement à un ordinateur doté d'un logiciel de restauration dentaire. Ce logiciel est doté d'une interface homme machine, par laquelle un opérateur peut indiquer le modèle d'élément de cicatrisation qu'il a utilisé, ou plus généralement la référence de l'élément de cicatrisation, et éventuellement de l'implant utilisé.

Afin d'identifier le modèle d'élément de cicatrisation utilisé, une première approche peut consister à former des éléments de restauration dentaire ou des vis ou des capuchons de couleur différente pour des modèles d'élément de cicatrisation différents.

Une seconde approche consiste à disposer tout indicateur sur la surface émergente de l'élément de cicatrisation pour indiquer le modèle d'élément de cicatrisation, cet indicateur pouvant être composé de chiffres et/ou de lettres et/ou de tout symbole et/ou de couleurs et/ou de marquages laser et/ou d'un ou plusieurs codes-barres et/ou de codes datamatrix et/ou de tout code d'identification.

Selon une troisième approche, le modèle d'élément de cicatrisation peut avoir été préalablement enregistré dans une base de données associée au patient. Le dentiste n'a alors qu'à consulter cette base de données pour identifier le modèle utilisé.

Enfin, selon une quatrième approche, le logiciel peut être capable d'identifier automatiquement le modèle d'élément de cicatrisation utilisé en comparant une numérisation de la surface émergente obtenue avec le scanner buccal avec une base de données comprenant un ensemble de numérisations des différents modèles d'éléments de restauration dentaire que le dentiste est susceptible d'avoir fixé sur l'implant du patient. Le logiciel détermine alors quel modèle d'élément de cicatrisation a une forme coïncidant avec l'empreinte de la surface émergeante relevée par le scanner buccal. La forme anatomique asymétrique de la partie émergente et de la surface terminale de l'élément de cicatrisation le rend automatiquement identifiable dans cette opération numérique. Les approches précédemment décrite à titre d'exemple peuvent également être combinées entre elles afin de fiabiliser l'identification de l'élément de cicatrisation.

A partir des données de numérisation, un logiciel détermine automatiquement la position de l'élément de cicatrisation. En effet, la forme anatomique de la surface émergente 23 est reconnaissable pour former une partie de prise d'empreinte numérique. Plus précisément, le logiciel fait coïncider la surface émergente de l'élément dentaire telle qu'obtenue par le scanner buccal avec une numérisation de l'élément de cicatrisation complet préalablement identifié, cette numérisation étant disponible dans une bibliothèque sous forme de base de données stockée dans une mémoire électronique qu'il peut consulter. Le dentiste ou un opérateur peut éventuellement assister le logiciel à la bonne superposition de la numérisation de la surface émergeante obtenue par le scanner buccal avec la numérisation du modèle d'élément de cicatrisation identifié, en saisissant sur une image obtenue par l'étape de numérisation mentionnée ci-dessus et présentée à l'opérateur sur un écran d'une interface homme machine un ou plusieurs points de la surface émergente. Puis, par construction géométrique, le logiciel détermine automatiquement la position de l'implant fixé selon une position unique par rapport à l'élément de cicatrisation. Grâce à un tel logiciel, le dentiste peut ainsi déterminer la position, et notamment l'axe de l'implant, sans avoir à le visualiser directement.

Lorsque le logiciel de restauration a repositionné avec exactitude le positionnement de l'implant caché, il déduit de ces connaissances la géométrie finale d'une prothèse définitive qui doit être fixée à l'implant et occuper tout le volume gingival défini par l'élément de cicatrisation. Cette prothèse définitive peut être fixée ensuite à l'implant soit directement soit par l'intermédiaire d'un pilier de restauration dentaire fixé à l'implant, de manière connue.

En remarque, ce procédé de restauration peut se faire totalement numériquement, donc virtuellement, ou comprendre des phases de construction d'une maquette en plastique ou plâtre. Dans ce dernier cas, une empreinte physique, par exemple en silicone, peut être réalisée, un plâtre peut être coulé dans l'empreinte pour créer le maître modèle, c'est à dire une réplique de l'arcade dentaire à restaurer, qui est ensuite scannée en laboratoire pour reconstruire une image numérique.

Comme cela ressort de la description ci-dessus, la dernière phase du procédé de restauration repose donc sur un dispositif de restauration, qui comprend une unité centrale de traitement et de commande, comprenant ici au moins un microprocesseur, lié à une mémoire électronique, sur lequel est exécuté un logiciel permettant la mise en oeuvre de tout ou partie des étapes du procédé de restauration décrit ci-dessus. Cette unité centrale est liée par un dispositif de communication à un module d'obtention de données numériques représentant tout ou partie d'une dentition d'un patient, qui peut consister en un appareil comme un scanner buccal. Elle est aussi liée à une interface homme machine, comprenant par exemple un écran et/ou un clavier, pour permettre les échanges avec un opérateur, comme explicité ci-dessus. L'unité centrale réalise ensuite tous les traitements nécessaires, calculs et autres, par un moyen logiciel. Elle est enfin apte à générer et transmettre des commandes de fabrication à un dispositif de fabrication d'un pilier de restauration et/ou de prothèse. Elle peut de plus être liée par un second dispositif de communication à un dispositif de fabrication comme une machine-outil.

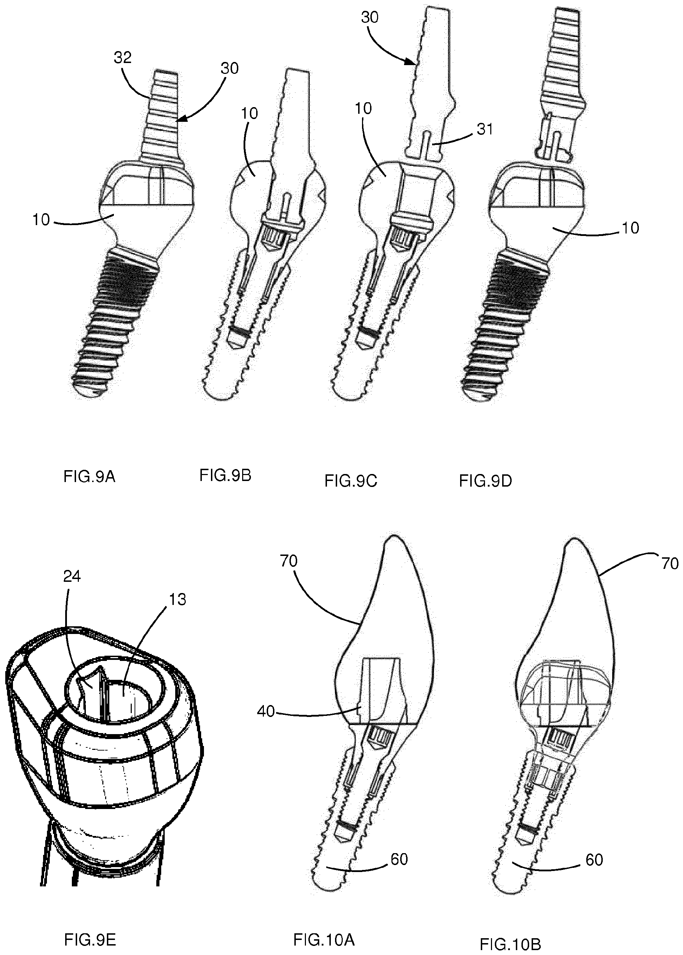

Comme illustré sur les figures 9A à 9D, l'élément de cicatrisation peut également être utilisé pour la fixation temporaire ou définitive d'un élément prothétique ou d'un outil de restauration dentaire. Comme cela apparait dans l'exemple spécifique de ces figures, l'élément prothétique peut être par exemple un pilier provisoire ou un support 30 autour duquel une prothèse sommitale, de préférence temporaire et optionnellement définitive, peut être fixée afin d'améliorer l'esthétique et/ou le confort du patient. L'outil de restauration dentaire pourrait être par exemple un élément de prise d'empreinte traditionnelle, qui permet d'enregistrer par empreinte traditionnelle dans un matériau de prise d'empreinte tel qu'une pâte appropriée, une empreinte de l'espace buccal au niveau de l'implant concerné par la restauration dentaire. Il s'agit ainsi d'une alternative à la prise d'empreinte numérique décrite précédemment. Le support 30 de prothèse a globalement une forme cylindrique et peut être localement tronqué de sorte à être compatible avec la forme angulée de l'élément de cicatrisation 10. Avantageusement, le support 30 comprend un élément de liaison mâle 31 apte à coopérer avec l'élargissement 17C agencé à l'intérieur de l'ouverture centrale 13. L'élargissement 17C a donc également la fonction d'un support 30 de prothèse, provisoire ou non, et/ou d'un élément de transfert d'empreinte. Ces éléments de liaison peuvent permettre une liaison de type clippage, ou toute autre liaison mécanique. De plus, le support 30 peut être équipé de stries circonférentielles 32 améliorant l'adhérence de la prothèse sommitale sur le support 30. Afin de garantir une orientation unique du support 30 par rapport à l'élément de cicatrisation 10, un dispositif anti-rotationnel 24, visible sur la figure 9E, peut être aménagé dans le deuxième tronçon 17 de l'ouverture centrale 13. L'élément anti-rotationnel 24 peut se présenter sous la forme d'une rainure parallèle au troisième axe A3 et pratiquée sur tout ou partie de la hauteur de la deuxième portion 17 de l'ouverture centrale 13. Naturellement, en variante, tout autre dispositif de liaison amovible peut être agencé au niveau du deuxième tronçon 17 de l'ouverture centrale 13 au sein de la partie coronaire 11.

Après cicatrisation, un pilier de restauration dentaire 40 coudé est fixé sur l'implant pour supporter une prothèse sommitale 70, finalisant ainsi la restauration dentaire, illustrée par la figure 10A. En remarque, ce coude présente avantageusement une angulation identique ou proche de l'angulation de l'élément de cicatrisation utilisé pour la cicatrisation. Comme illustré par la figure 10B, la forme inférieure de la prothèse sommitale 70 au sein de la gencive correspond à celle de l'élément de cicatrisation 10 utilisé pour la cicatrisation : grâce à cette approche, la prothèse prend place sans heurt, de manière idéale, dans le logement de forme anatomique préparé par la phase de cicatrisation. La prothèse peut facilement être fixée à l'implant au moyen d'une vis passant dans un puits de vis orienté du côté lingual. La prothèse finale est donc particulièrement esthétique puisque le puits de vis est invisible depuis l'extérieur de la bouche.

Grâce à l'invention, on dispose d'un élément de cicatrisation qui minimise le traumatisme du patient lors du procédé de restauration car il n'est pas utile de le retirer pour réaliser une empreinte de l'implant sous-jacent en vue de fabriquer la prothèse définitive. L'élément de cicatrisation peut même être conservé lors de la phase d'installation de la prothèse définitive, ce qui réduit encore le traumatisme pour le patient. Grâce à sa forme anatomique, la gencive cicatrise selon sa forme naturelle. La gencive n'est pas déformée lors de la pose de la prothèse définitive. De plus l'installation d'un élément de cicatrisation est particulièrement simple car il est constitué d'une seule pièce vissée dans l'implant. Enfin, l'aspect esthétique du patient est optimisé dès la phase de cicatrisation car l'élément de cicatrisation possède une partie coronaire dont l'orientation respecte l'orientation naturelle des dents et leur forme. De plus cette orientation permet de masquer le puits de la vis utilisée pour la fixation.

Cette courbure particulière de l'élément de restauration, puis de l'éventuel pilier définitif de restauration, permettent la formation d'une prothèse 70 agencée autour d'une ouverture inférieure formant un moyen de liaison destiné à coopérer avec ledit pilier, puisqu'elle se fixe dans la bonne orientation finale grâce à l'agencement préalable de l'invention. Cela évite par exemple de tenter de rattraper un angle par l'intermédiaire d'une forme dissymétrique d'une prothèse, au détriment de la rigidité mécanique et de l'aspect esthétique de cette prothèse. Autrement dit, l'invention permet d'utiliser une prothèse de forme optimale, qui s'étend automatiquement en fin de restauration globalement selon la direction définie par le deuxième axe A2, non aligné avec l'axe longitudinal L de l'implant.

## Revendications

1. Elément de cicatrisation (10) monobloc, qui comprend :
- une partie implantaire (12) adaptée à une fixation sur un implant (60) dentaire, dont au moins une partie inférieure est orientée selon un premier axe (A1),
- une partie coronaire (11) destinée à une intégration au sein d'une gencive (3) pour mettre en forme la gencive (3) lors de sa cicatrisation, dont au moins une partie supérieure s'étend globalement selon un deuxième axe (A2), la partie coronaire (11) comprenant une surface terminale (21) et une surface latérale (22), la surface terminale étant destinée à rester visible au-dessus d'une surface gingivale (4) de la gencive (3), la gencive étant destinée à être intégralement en contact avec la surface latérale (22), et tel que le premier axe (A1) et le deuxième axe (A2) forment un premier angle (α) non nul.

2. Elément de cicatrisation (10) selon la revendication précédente, **caractérisé en ce que** la partie coronaire (11) comprend une surface latérale (22) destinée à une intégration au sein d'une gencive (3) pour mettre en forme la gencive (3) lors de sa cicatrisation, et une surface terminale (21) à son extrémité supérieure, une partie de la surface latérale (22) et de la surface terminale (21) formant une surface émergente (23), destinée à rester hors de la gencive (3), qui est asymétrique par rapport à au moins un plan médian (PM) pour présenter une forme anatomique, et/ou **en ce que** cette surface émergente (23) comprend un unique plan de symétrie (PS) pour présenter une forme anatomique.

3. Elément de cicatrisation (10) selon la revendication 2, **caractérisé en ce que** des parties de la surface émergente (23) de l'élément de cicatrisation (10) destinées respectivement à un positionnement orienté vers l'intérieur et vers l'extérieur de la bouche présentent une forme différente.

4. Elément de cicatrisation (10) selon l'une des revendications 2 ou 3, **caractérisé en ce qu'**une section transverse perpendiculairement au deuxième axe (A2) de la surface latérale (22) de la partie coronaire (11) ou une projection sur un plan parallèle à un plan transverse perpendiculaire au deuxième axe (A2) de la surface émergente (23) de la partie coronaire (11) présente :
- une forme sensiblement trapézoïdale ou une forme sensiblement polygonale, ou triangulaire, ou carrée, ou rectangulaire, ou ovoïde, ou une forme sensiblement polygonale avec des angles arrondis ; et/ou
- une partie destinée à un positionnement orienté vers l'extérieur de la bouche de plus grande dimension qu'une partie destinée à un positionnement orienté vers l'intérieur.

5. Elément de cicatrisation (10) selon l'une des revendications 2 à 4, **caractérisé en ce que** la surface émergente (23) de l'élément de cicatrisation (10) présente une forme tridimensionnelle identifiable, formant une partie de prise d'empreinte numérique, permettant automatiquement sa reconnaissance, son positionnement, et/ou son orientation et indirectement le positionnement et l'orientation d'un l'implant (60), sans marqueur.

6. Elément de cicatrisation (10) selon l'une des revendications précédentes, **caractérisé en ce que** :
- au moins une partie de la surface latérale (22) de la partie coronaire (11), notamment au niveau d'une partie supérieure comme une surface émergente (23), est formée par un ensemble de génératrices (G) parallèles, et **en ce que** le deuxième axe (A2) est parallèle à cet ensemble de génératrices ; ou
- au moins une partie de la surface latérale (22) de la partie coronaire (11), notamment au niveau d'une partie supérieure comme une surface émergente (23), est inscrite dans un cylindre à section circulaire le plus proche de ladite partie, et **en ce que** le deuxième axe (A2) correspond à l'axe de ce cylindre.

7. Elément de cicatrisation (10) selon l'une des revendications précédentes, **caractérisé en ce qu'**il comprend une portée conique (16A) apte à coopérer avec une portion conique d'une tête de vis (51) pour rendre étanche une interface entre une vis (50) et l'élément de cicatrisation (10), et/ou **en ce qu'**il comprend une portion tronconique (20) apte à coopérer avec une portée conique (67) de l'implant (60) pour rendre étanche une interface entre l'implant (60) et l'élément de cicatrisation (10) et pour réduire à zéro tout jeu en translation entre l'élément de cicatrisation (10) et l'implant (60).

8. Elément de cicatrisation (10) selon l'une des revendications précédentes, **caractérisé en ce qu'**il comprend un élément anti-rotationnel, notamment une portion de section hexagonale (19), pour coopérer avec un élément anti-rotationnel d'un implant (60), notamment une ouverture de section hexagonale (66), et garantir une fixation de l'élément de cicatrisation (10) sans rotation autour de l'implant (60),
et/ou **en ce que** l'élément de cicatrisation (10) est fabriqué à partir d'un matériau polymère, notamment à partir d'un matériau « PEEK » ou en métal, en zircone ou en titane et/ou **en ce qu'**il est fabriqué par usinage et/ou par moulage et/ou par addition de matière.

9. Elément de cicatrisation (10) selon l'une des revendications précédentes, **caractérisé en ce que** l'ouverture centrale (13) comprend localement un élargissement (17C) dimensionné pour permettre le pivotement d'une vis (50) vers une orientation parallèle au premier axe (A1) et/ou pour recevoir un élément de liaison mâle (31, 83) d'un élément prothétique, notamment d'un pilier, d'un support (30) de prothèse provisoire, d'un capuchon (80), ou d'un élément de prise d'empreinte,
et/ou **en ce que** l'élément de cicatrisation (10) comprend un dispositif de liaison agencé dans le deuxième tronçon (17) de l'ouverture centrale (13) dans la partie coronaire (11) apte à recevoir la fixation amovible d'un pilier, d'un support (30) de prothèse provisoire, d'un capuchon (80), ou d'un élément de prise d'empreinte,
et/ou **en ce que** l'angle (α) formé entre le premier axe (A1) et le deuxième axe (A2) est compris entre 5 et 30 degrés ou est supérieur ou égal à 10 degrés,

10. Elément de cicatrisation (10) selon l'une des revendications précédentes, **caractérisé en ce qu'**il comprend une ouverture centrale (13) s'étendant sur toute sa longueur, adaptée pour le passage d'une vis (50) et/ou d'un outil comme un tournevis pour le vissage d'une vis (50) dans un implant (60), l'ouverture centrale (13) comprenant une sortie (14) au niveau de l'extrémité inférieure de la partie implantaire (12), destinée à une coopération avec un implant (60), et **en ce que** le premier axe (A1) est orienté de manière parallèle à l'axe de la sortie (14).

11. Elément de cicatrisation (10) selon la revendication précédente, **caractérisé en ce que** l'ouverture centrale (13) comprend une entrée (15) au niveau de l'extrémité supérieure de la partie coronaire (11), l'entrée (15) étant sensiblement orientée suivant un troisième axe (A3), et **en ce que** le deuxième axe (A2) est parallèle au troisième axe (A3), ou le deuxième axe (A2) et le troisième axe (A3) présentent un deuxième angle (β) non nul.

12. Ensemble de restauration dentaire (1), **caractérisé en ce qu'**il comprend un élément de cicatrisation (10) selon l'une des revendications précédentes, un implant (60), une vis (50), et un capuchon (80), apte à obturer l'ouverture centrale (13) pour former une surface terminale (21) de l'élément de cicatrisation continue et sans aspérité.

13. Système de restauration dentaire, **caractérisé en ce qu'**il comprend un élément de cicatrisation (10) selon l'une des revendications 1 à 11, un élément de prise d'empreinte numérique, notamment un scanner, et au moins un calculateur qui exploite les images provenant de la prise d'empreinte numérique pour une reconnaissance automatique, sur la base de la forme anatomique de l'élément de cicatrisation et/ou par la reconnaissance d'au moins un marqueur, du type d'élément de cicatrisation utilisé, à partir d'images d'une partie émergente (23) de l'élément de cicatrisation (10).

14. Procédé de fabrication d'une prothèse dentaire définitive comprenant une étape de détermination d'un positionnement d'un implant (60) dentaire, intégré à une structure osseuse (62) d'un individu, à partir de l'identification et du positionnement d'un élément de cicatrisation (10) selon l'une des revendications 1 à 11, l'élément de cicatrisation (10) étant fixé au niveau d'une de ses extrémités dans l'implant (60), l'élément de cicatrisation (10) comprenant une surface latérale (22) destinée à une intégration au sein d'une gencive (3) pour mettre en forme la gencive (3) lors de sa cicatrisation, et une surface terminale (21), une partie de la surface latérale (22) et de la surface terminale (21) formant une surface émergente (23), destinée à rester hors de la gencive (3), qui est asymétrique par rapport à au moins un plan médian (PM) pour présenter une forme anatomique.

## Patentansprüche

1. Einstückiges Einheilelement (10), umfassend:
- einen Implantatteil (12), der dazu geeignet ist, an einem Zahnimplantat (60) befestigt zu sein, von dem zumindest ein unterer Teil entlang einer ersten Achse (A1) ausgerichtet ist,
- einen koronalen Teil (11), der dazu bestimmt ist, in ein Zahnfleisch (3) integriert zu sein, um das Zahnfleisch (3) während seiner Heilung zu formen, von dem sich zumindest ein oberer Teil im Allgemeinen entlang einer zweiten Achse (A2) erstreckt, wobei der koronale Teil (11) eine Endfläche (21) und eine Seitenfläche (22) umfasst, wobei die Endfläche dazu bestimmt ist, über einer gingivalen Fläche (4) des Zahnfleischs (3) sichtbar zu bleiben, wobei das Zahnfleisch vollständig in Kontakt mit der Seitenfläche (22) stehen soll und wobei die erste Achse (A1) und die zweite Achse (A2) einen ersten Winkel (α) ungleich Null bilden.

2. Einheilelement (10) nach dem vorangehenden Anspruch, **dadurch gekennzeichnet, dass** der koronale Teil (11) Folgendes umfasst: eine Seitenfläche (22), die dazu bestimmt ist, in ein Zahnfleisch (3) integriert zu sein, um das Zahnfleisch (3) bei seiner Heilung zu formen, und eine Endfläche (21) an seinem oberen Ende, wobei ein Teil der Seitenfläche (22) und der Endfläche (21) eine hervorstehende Fläche (23) bilden, die dazu bestimmt ist, außerhalb des Zahnfleischs (3) zu bleiben, die in Bezug auf zumindest eine Mittelebene (PM) asymmetrisch ist, um eine anatomische Form aufzuweisen, und/oder dass diese hervorstehende Fläche (23) eine einzige Symmetrieebene (PS) umfasst, um eine anatomische Form aufzuweisen.

3. Einheilelement (10) nach Anspruch 2, **dadurch gekennzeichnet, dass** Teile der hervorstehenden Fläche (23) des Einheilelements (10), die für eine im Mund nach innen bzw. nach außen gerichtete Positionierung bestimmt sind, eine unterschiedliche Form aufweisen.

4. Einheilelement (10) nach einem der Ansprüche 2 oder 3, **dadurch gekennzeichnet, dass** ein Querschnitt senkrecht zur zweiten Achse (A2) der Seitenfläche (22) des koronalen Teils (11) oder eine Projektion auf eine Ebene, die parallel zu einer Querebene verläuft, die senkrecht zur zweiten Achse (A2) der hervorstehenden Fläche (23) des koronalen Teils (11) verläuft, Folgendes aufweist:
- eine im Wesentlichen trapezförmige Form oder eine im Wesentlichen polygonale oder dreieckige oder quadratische oder rechteckige oder eiförmige Form oder eine im Wesentlichen polygonale Form mit abgerundeten Ecken und/oder
- einen für eine im Mund nach außen gerichtete Positionierung bestimmten Teil, der größer ist als ein für eine nach innen gerichtete Positionierung bestimmter Teil.

5. Einheilelement (10) nach einem der Ansprüche 2 bis 4, **dadurch gekennzeichnet, dass** die hervorstehende Fläche (23) des Einheilelements (10) eine identifizierbare dreidimensionale Form aufweist, die einen Teil zur digitalen Abdrucknahme bildet, der automatisch seine Wiedererkennung, seine Positionierung und/oder seine Ausrichtung und indirekt die Positionierung und die Ausrichtung des Implantats (60) ohne Marker ermöglicht.

6. Einheilelement (10) nach einem der vorangehenden Ansprüche, **dadurch gekennzeichnet, dass**:
- zumindest ein Teil der Seitenfläche (22) des koronalen Teils (11), insbesondere an einem oberen Teil wie einer hervorstehenden Fläche (23), durch einen Satz paralleler Mantellinien (G) gebildet ist und dass die zweite Achse (A2) parallel zu diesem Satz von Mantellinien verläuft; oder
- zumindest ein Teil der Seitenfläche (22) des koronalen Teils (11), insbesondere an einem oberen Teil wie einer hervorstehenden Fläche (23), Teil eines Zylinders mit kreisförmigem Querschnitt ist, der dem Teil am nächsten liegt, und dass die zweite Achse (A2) der Achse dieses Zylinders entspricht.

7. Einheilelement (10) nach einem der vorangehenden Ansprüche, **dadurch gekennzeichnet, dass** es einen konischen Bereich (16A) umfasst, der mit einem konischen Abschnitt eines Schraubenkopfs (51) zusammenwirken kann, um eine Schnittstelle zwischen einer Schraube (50) und dem Einheilelement (10) abzudichten, und/oder dass es einen kegelstumpfförmigen Abschnitt (20) umfasst, der mit einem konischen Bereich (67) des Implantats (60) zusammenwirken kann, um eine Schnittstelle zwischen dem Implantat (60) und dem Einheilelement (10) abzudichten und um jegliches Translationsspiel zwischen dem Einheilelement (10) und dem Implantat (60) auf null zu reduzieren.

8. Einheilelement (10) nach einem der vorangehenden Ansprüche, **dadurch gekennzeichnet, dass** es ein Drehsicherungselement umfasst, insbesondere einen Abschnitt mit hexagonalem Querschnitt (19), um mit einem Drehsicherungselement eines Implantats (60), insbesondere einer Öffnung mit hexagonalem Querschnitt (66), zusammenzuwirken und eine Befestigung des Einheilelements (10) ohne Drehung um das Implantat (60) zu gewährleisten,
und/oder dass das Einheilelement (10) aus einem Polymermaterial, insbesondere aus einem PEEK-Material, oder aus Metall, Zirkonoxid oder Titan hergestellt ist und/oder dass es durch maschinelle Bearbeitung und/oder durch Gießen und/oder durch Hinzufügen von Material hergestellt ist.

9. Einheilelement (10) nach einem der vorangehenden Ansprüche, **dadurch gekennzeichnet, dass** die zentrale Öffnung (13) lokal eine Erweiterung (17C) umfasst, die dazu dimensioniert ist, das Schwenken einer Schraube (50) in eine zur ersten Achse (A1) parallele Ausrichtung zu ermöglichen und/oder ein männliches Verbindungselement (31, 83) eines prothetischen Elements, insbesondere eines Abutments, eines Trägers (30) für eine provisorische Prothese, einer Kappe (80) oder eines Abdrucknahmeelements aufzunehmen, und/oder dass das Einheilelement (10) eine Verbindungsvorrichtung umfasst, die im zweiten Abschnitt (17) der zentralen Öffnung (13) im koronalen Teil (11) angeordnet und dazu geeignet ist, die lösbare Befestigung eines Abutments, eines Trägers (30) einer provisorischen Prothese, einer Kappe (80) oder eines Abdrucknahmeelements aufzunehmen,
und/oder dass der Winkel (α), der zwischen der ersten Achse (A1) und der zweiten Achse (A2) gebildet ist, zwischen 5 und 30 Grad beträgt oder 10 Grad oder mehr beträgt.

10. Einheilelement (10) nach einem der vorangehenden Ansprüche, **dadurch gekennzeichnet, dass** es eine zentrale Öffnung (13) umfasst, die sich über seine gesamte Länge erstreckt und für den Durchgang einer Schraube (50) und/oder eines Werkzeugs wie eines Schraubendrehers zum Einschrauben einer Schraube (50) in ein Implantat (60) geeignet ist, wobei die zentrale Öffnung (13) am unteren Ende des Implantatteils (12) einen Ausgang (14) umfasst, der dazu bestimmt ist, mit einem Implantat (60) zusammenzuwirken, und dass die erste Achse (A1) parallel zur Achse des Auslasses (14) angeordnet ist.

11. Einheilelement (10) nach dem vorangehenden Anspruch, **dadurch gekennzeichnet, dass** die zentrale Öffnung (13) am oberen Ende des koronalen Teils (11) einen Einlass (15) umfasst, wobei der Einlass (15) im Wesentlichen entlang einer dritten Achse (A3) ausgerichtet ist, und dass die zweite Achse (A2) parallel zur dritten Achse (A3) verläuft oder die zweite Achse (A2) und die dritte Achse (A3) einen zweiten Winkel (β) ungleich Null aufweisen.

12. Zahnrestaurationseinheit (1), **dadurch gekennzeichnet, dass** sie ein Einheilelement (10) nach einem der vorangehenden Ansprüche, ein Implantat (60), eine Schraube (50) und eine Kappe (80) umfasst, die dazu geeignet ist, die zentrale Öffnung (13) zu verschließen, um eine durchgehende Endfläche (21) des Einheilelements ohne Unebenheiten zu bilden.

13. Zahnrestaurationssystem, **dadurch gekennzeichnet, dass** es ein Einheilelement (10) nach einem der Ansprüche 1 bis 11, ein digitales Abdrucknahmeelement, insbesondere einen Scanner, und mindestens einen Rechner umfasst, der die Bilder aus der digitalen Abdrucknahme auswertet, um auf der Grundlage der anatomischen Form des Einheilelements und/oder durch Erkennung mindestens eines Markers anhand von Bildern eines hervorstehenden Teils (23) des Einheilelements (10) automatisch den Typ des verwendeten Einheilelements zu erkennen.

14. Verfahren zur Herstellung einer endgültigen Zahnprothese, umfassend einen Schritt des Bestimmens einer Positionierung eines Zahnimplantats (60), das in eine Knochenstruktur (62) eines Individuums integriert ist, anhand der Identifizierung und Positionierung eines Einheilelements (10) nach einem der Ansprüche 1 bis 11, wobei das Einheilelement (10) an einem seiner Enden im Implantat (60) befestigt ist, wobei das Einheilelement (10) Folgendes umfasst: eine Seitenfläche (22), die dazu bestimmt ist, in ein Zahnfleisch (3) integriert zu sein, um das Zahnfleisch (3) bei seiner Heilung zu formen, und eine Endfläche (21), wobei ein Teil der Seitenfläche (22) und der Endfläche (21) eine hervorstehende Fläche (23) bilden, die dazu bestimmt ist, außerhalb des Zahnfleischs (3) zu bleiben, und die in Bezug auf zumindest eine Mittelebene (PM) asymmetrisch ist, um eine anatomische Form aufzuweisen.

## Claims

1. One-piece healing element (10) which comprises:
- an implant part (12) intended to be fixed to a dental implant (60), of which at least a lower part is oriented along a first axis (A1),
- a coronal part (11) intended to be integrated into a gum (3) in order to shape the gum (3) as it heals, of which at least an upper part extends overall along a second axis (A2), the coronal part (11) having a terminal surface (21) and a lateral surface (22), the terminal surface being intended to remain visible above a gum surface (4) of the gum (3), the gum being intended to be wholly in contact with the lateral surface (22)
and which is such that the first axis (A1) and the second axis (A2) form a non-zero first angle (α).

2. Healing element (10) according to the preceding claim, **characterized in that** the coronal part (11) comprises a lateral surface (22) intended to be integrated into a gum (3) in order to shape the gum (3) as it heals, and a terminal surface (21) at its upper end, a part of the lateral surface (22) and of the terminal surface (21) forming an emergent surface (23), intended to remain out of the gum (3), which is asymmetric with respect to at least a median plane (PM) so as to exhibit an anatomical shape, and/or **in that** this emergent surface (23) comprises a single plane of symmetry (PS) so as to exhibit an anatomical shape.

3. Healing element (10) according to Claim 2, **characterized in that** parts of the emergent surface (23) of the healing element (10), which are respectively intended to be positioned facing towards the inside and towards the outside of the mouth, have different shapes.

4. Healing element (10) according to either of Claims 2 and 3, **characterized in that** a cross section perpendicular to the second axis (A2) of the lateral surface (22) of the coronal part (11) or a projection onto a plane parallel to a transverse plane perpendicular to the second axis (A2) of the emergent surface (23) of the coronal part (11) exhibits:
- a substantially trapezoidal shape or a substantially polygonal or triangular or square or rectangular or ovoid shape or a substantially polygonal shape with rounded corners; and/or
- a part intended to be positioned facing towards the outside of the mouth that is larger in dimension than a part intended to be positioned facing towards the inside.

5. Healing element (10) according to one of Claims 2 to 4, **characterized in that** the emergent surface (23) of the healing element (10) exhibits an identifiable three-dimensional shape forming a part for the taking of a digital impression, allowing automatic recognition, positioning and/or orientation thereof and indirectly allowing an implant (60) to be positioned and oriented without a marker.

6. Healing element (10) according to one of the preceding claims, **characterized in that**:
- at least a part of the lateral surface (22) of the coronal part (11), notably at an upper part such as an emergent surface (23), is formed by a set of parallel generatrices (G), and **in that** the second axis (A2) is parallel to this set of generatrices; or
- at least a part of the lateral surface (22) of the coronal part (11), notably at an upper part such as an emergent surface (23), is inscribed inside a cylinder of circular cross section closest to said part, and **in that** the second axis (A2) corresponds to the axis of this cylinder.

7. Healing element (10) according to one of the preceding claims, **characterized in that** it comprises a conical bearing surface (16A) able to collaborate with a conical portion of a screw head (51) so as to seal tight an interface between a screw (50) and the healing element (10), and/or **in that** it comprises a frustoconical portion (20) able to collaborate with a conical bearing surface (67) of the implant (60) so as to seal tight an interface between the implant (60) and the healing element (10) and reduce to zero any translational play between the healing element (10) and the implant (60).

8. Healing element (10) according to one of the preceding claims, **characterized in that** it comprises a rotation-proofing element, notably a hexagonal-section portion (19), to collaborate with a rotation-proofing element of an implant (60), notably a hexagonal-section opening (66), and ensure that the healing element (10) is fixed without the ability to rotate around the implant (60),
and/or **in that** the healing element (10) is made from a polymer material, notably from a PEEK material, or from metal, zirconia or titanium, and/or **in that** it is manufactured by machining and/or by moulding and/or by additive manufacturing.

9. Healing element (10) according to one of the preceding claims, **characterized in that** the central opening (13) locally comprises a widening (17C) dimensioned so as to allow a screw (50) to pivot into an orientation parallel to the first axis (A1) and/or to accept a male connection element (31, 83) of a prosthetic element, notably of an abutment, of a support (30) for a temporary prosthesis, of a cap (80) or of an impression-taking element,
and/or **in that** the healing element (10) comprises a connecting device arranged in the second portion (17) of the central opening (13) in the coronal part (11) able to accept the removable attachment of an abutment, of a support (30) for a temporary prosthesis, of a cap (80) or of an impression-taking element,
and/or **in that** the angle (α) formed between the first axis (A1) and the second axis (A2) is comprised between 5 and 30 degrees or is greater than or equal to 10 degrees.

10. Healing element (10) according to one of the preceding claims, **characterized in that** it comprises a central opening (13) extending over its entire length, suitable for the passage of a screw (50) and/or of a tool such as a screwdriver for screwing a screw (50) into an implant (60), the central opening (13) comprising an exit (14) at the lower end of the implant part (12), intended for collaboration with an implant (60), and **in that** the first axis (A1) is oriented parallel to the axis of the exit (14).

11. Healing element (10) according to the preceding claim, **characterized in that** the central opening (13) has an entrance (15) at the upper end of the coronal part (11), the entrance (15) being oriented substantially along a third axis (A3), and **in that** the second axis (A2) is parallel to the third axis (A3), or the second axis (A2) and the third axis (A3) exhibit a non-zero second angle (β).

12. Dental restoration assembly (1), **characterized in that** it comprises a healing element (10) according to one of the preceding claims, an implant (60), a screw (50) and a cap (80) able to occlude the central opening (13) so as to form for the healing element a terminal surface (21) that is continuous and free of roughness.

13. Dental restoration system, **characterized in that** it comprises a healing element (10) according to one of Claims 1 to 11, a digital impression-taking element, notably a scanner, and at least a computer that exploits the images from the digital impression taken for the purpose of automatic recognition, on the basis of the anatomical shape of the healing element and/or by the recognition of at least one marker, of the type of healing element used, from images of an emergent part (23) of the healing element (10).

14. Method for manufacturing a definitive dental prosthesis comprising a step of determining the positioning of a dental implant (60), which is integrated into a bony structure (62) of an individual, from the identification and the positioning of a healing element (10) according to one of Claims 1 to 11, the healing element (10) being fixed at one of its ends into the implant (60), the healing element (10) comprising a lateral surface (22) intended for integration into a gum (3) in order to shape the gum (3) as it heals, and a terminal surface (21), a part of the lateral surface (22) and of the terminal surface (21) forming an emergent surface (23), intended to remain out of the gum (3), which is asymmetric with respect to at least a median plane (PM) so as to exhibit an anatomical shape.
